(19) Europäisches Patentamt
European Patent Office
Office européen des brevets

(11) Publication number: **0 429 654 A1**

(12) **EUROPEAN PATENT APPLICATION published in accordance with Art. 158(3) EPC**

(21) Application number: **90904693.0**

(22) Date of filing: **17.03.90**

(86) International application number: **PCT/JP90/00362**

(87) International publication number: **WO 90/11234 (04.10.90 90/23)**

(51) Int. Cl.$^5$: **B65D 81/24**, B32B 1/02, B32B 27/36, B29C 45/00, //B29K67:00,B29L22:00

(30) Priority: **17.03.89 JP 63817/89**
**31.05.89 JP 136073/89**

(43) Date of publication of application: **05.06.91 Bulletin 91/23**

(84) Designated Contracting States: **BE DE FR GB Bulletin**

(71) Applicant: **TOYO SEIKAN KAISHA, LTD.**
**3-1, Uchisaiwai-cho 1-chome Chiyoda-ku**
**Tokyo 100(JP)**

(72) Inventor: **KAWAGUCHI, Kouichi 179,**
**Ooguchinakamachi**
**Kanagawa-ken Yokohama-shi**
**Kanagawa-ken 221(JP)**
Inventor: **MOCHIDA, Takaaki 179,**
**Ooguchinakamachi**
**Kanagawa-ku Yokohama-shi**
**Kanagawa-ken 221(JP)**
Inventor: **MARUHASHI, Yoshitsugu 6-35-3,**
**Hiyoshi Honcho**
**Kouhoku-ku Yokohama-shi**
**Kanagawa-ken 223(JP)**

(74) Representative: **Woodcraft, David Charles et al**
**BROOKES & MARTIN High Holborn House**
**52/54 High Holborn**
**London, WC1V 6SE(GB)**

# (54) LIQUID-CRYSTAL POLYESTER CONTAINER AND MANUFACTURE THEREOF.

(57) This invention relates to a container excellent in gas-impermeability comprising a liquid-crystal polyester which forms a liquid crystal in a dissolved or molten state and a thermoplastic resin, and to a method of manufacturing said container. The liquid-crystal polyester is enclosed in the thermoplastic resin and present in the form of layers, fibers, granules or flakes substantially contiguous to each other. When a nucleating agent is added to the thermoplastic resin, a container manufactured from the raw material containing such resin also has an improved heat resistance.

EP 0 429 654 A1

FIG. 3-A

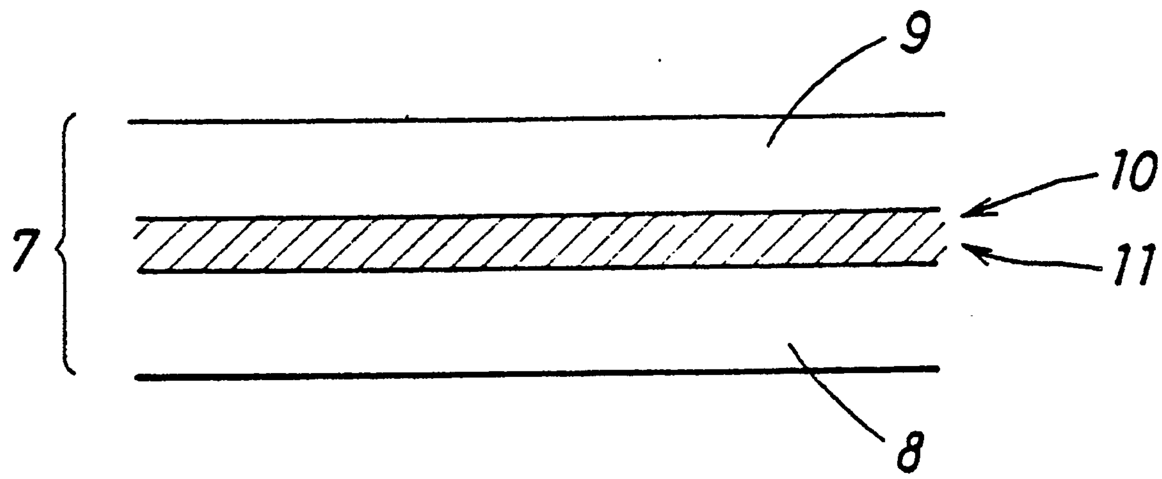

# LIQUID CRYSTAL POLYESTER VESSEL AND PROCESS FOR PREPARATION THEREOF

## Technical Background

The present invention relates to a liquid crystal polyester vessel and a process for the preparation thereof. More particularly, the present invention relates to a process for the preparation of a vessel having an improved resistance to gas permeation. Furthermore, the present invention relates to a heat-resistant polyester vessel. More particularly, the present invention relates to a packaging polyester vessel composed of a blend of a crystallization nucleating agent-containing polyester composition and a liquid crystal polyester, which is excellent in the combination of the gas barrier property for preservation of a content and the toughness and heat resistance required for a vessel, especially a vessel for heat-cooking.

## Conventional Technique

A resin molded vessel has a light weight and an excellent shock resistance, and therefore, is widely used as a packaging vessel for foods, cosmetics, detergents and various chemicals.

In case of a metal can or glass bottle, the permeation of a gas through the vessel wall is substantially zero, but in case of the resin molded vessel, the permeation of a gas through the vessel wall cannot be neglected. For obviating this disadvantage, a resin having a resistance to the gas permeation has already been used as a vessel-constituting material. For example, an ethylene/vinyl alcohol copolymer or a vinylidene chloride resin is used for improving the gas permeation resistance of the vessel wall.

The ethylene/vinyl alcohol copolymer shows an excellent gas barrier property under a condition of a relatively humidity (RH) of 0%, but under a high-humidity condition, the gas permeation coefficient, for example, $PO_2$, is increased to a level about 100 times as high as $PO_2$ at RH of 0%. Although the vinylidene chloride resin is advantageous in that the humidity dependency of the gas permeation coefficient is small, this resin is insufficient in the heat stability and the formation and use of the vessel are often restricted by this insufficient heat stability. Especially, in the case where a food filled in the vessel is heated and cooked together with the vessel before eating, extreme thermal deterioration of the resin is caused by heating in an oven toaster or the like.

A plastic vessel used in an electronic range is composed mainly of polypropylene, and in the field where a gas barrier property is required, a gas barrier resin as mentioned above is used in the state laminated with a polypropylene layer.

However, the vessel of this type inherently has a heat resistance of polypropylene, and in case of an oily food or the like, the temperature of which is elevated even in an electronic range, the vessel of this type cannot be used, and of course, exposure to a high temperature in an oven is not permissible. Also a vessel composed of a crystallized polyester called C-PET is known, but this vessel has no barrier property and cannot resist a high temperature such as the temperature adopted in an oven.

Recently, a liquid crystal polymer has attracted attention in the field of fibers because the polymer has excellent mechanical properties. The liquid crystal polymer is divided into a polymer forming a liquid crystal in the state of a solution (dope)(rheotropic liquid crystal) and a polymer forming a liquid crystal in the state of a melt (thermotropic liquid crystal). The former polymer is an aromatic polyamide represented by Kevlar (supplied by Du Pont), and the latter polymer is an aromatic polyester represented by Vectra (supplied by Celanease).

These liquid crystals have a so-called polydomain structure comprising a continuity of domains where rigid molecules are regularly aligned, and it is said that if a shear stress is applied to this structure, the molecules are oriented in the direction of the application of the shear stress, and therefore, an excellent strength is obtained.

Use of a liquid crystal polyester for the production of a draw-formed body such as a film has already been proposed. For example, Japanese Unexamined Patent Publication No. 62-187033 discloses a laminated draw-formed article comprising a layer composed of a heat-liquid-crystal polyester formed of (A) aromatic dicarboxylic acid units, (B) aliphatic diol units and (C) hydroxy aromatic carboxylic acid units, and a layer composed of a polyester containing an ethylene terephthalate component and formed on at least one surface of the liquid crystal polyester layer, which is oriented in at least one direction.

However, melt forming of a liquid crystal polyester into a three-dimensional vessel is considerably difficult because molecules of the polyester tend to be oriented in the shear stress-applying direction. More specifically, the melt of the liquid crystal polyester is different from the melt of an ordinary plastic material in that the flow orientability of the melt is extremely large and the melt tends to flow in one dimension, and

therefore, it is difficult to uniformly distribute the melt in a die orifice and obtain a formed article having a uniform thickness. This tendency is similarly observed in case of extrusion molding or injection molding of a liquid crystal polyester and an ordinary polyester into a multi-layer vessel.

If there is such a thickness unevenness in the liquid crystal polyester layer or there is a portion where the liquid crystal polyester layer is lacking, the strength and gas permeation resistance inherently possessed by the liquid crystal polyester are degraded.

It is known that the heat resistance of a thermoplastic polyester can be improved by heat-treating the thermoplastic polyester and highly crystallizing the polyester. In a vessel crystallized by this heat treatment, the heat resistance is improved to some extent, but the vessel becomes extremely brittle and is not suitable as a packaging vessel in the impact resistance and shape-retaining property.

## Summary of the Invention

It is a primary object of the present invention to provide a multi-layer vessel comprising a liquid crystal polyester, in which a liquid crystal polyester layer is uniformly distributed in the vessel wall and the liquid crystal polyester is effectively molecularly oriented in one axial direction, whereby the gas permeation resistance is prominently improved, and a process for the preparation of a this liquid crystal polyester multi-layer vessel.

Another object of the present invention is to provide a liquid crystal polyester vessel having a high gas permeation resistance and a high heat resistance in combination, and a process for the preparation of this vessel.

Still another object of the present invention is to provide a process in which a liquid crystal polyester multi-layer vessel having the above-mentioned characteristics can be prepared simply at a high efficiency by injection molding.

In accordance with the present invention, there is provided a process for the preparation of a liquid crystal polyester vessel having an excellent gas permeation resistance, which comprises melt-injecting a mixture containing a thermoplastic resin and a liquid crystal polyester, in which the melt viscosity of the thermoplastic resin, measured at a temperature higher by at least 10 °C than the higher temperature between the melting point of the thermoplastic resin and the flow-initiating point of the liquid crystal polyester and a shear rate of at least $1 \times 10^5$ $sec^{-1}$ , is higher than the melt viscosity of the liquid crystal polyester measured under the same conditions, into a vessel-injection-molding mold at a resin temperature giving said difference of the melt viscosity, to form in the mold a multi-layer distribution structure in which the thermoplastic resin is predominantly distributed in inner and outer portions and the liquid crystal polyester is predominantly distributed in the intermediate portion.

In accordance with the present invention, there also is provided a liquid crystal polyester vessel having an excellent gas permeation resistance, which comprises a thermoplastic resin distributed in the form of a layer predominantly in inner and outer surface portions and a liquid crystal polyester distributed in the form of a layer predominantly in a central portion, wherein the liquid crystal polyester is present in the state substantially continuous in the plane direction of the vessel when seen in the direction of the thickness of the vessel wall and the liquid polyester is molecularly oriented mainly in one axial direction, and the thermoplastic resin is substantially unoriented.

The process for the preparation of a liquid crystal polyester multi-layer vessel according to the present invention is first characterized in that a mixture of a liquid crystal polyester and a thermoplastic resin is used. Namely, by using both the resin components in the form of a mixture, the injection operation is facilitated because it is sufficient if a single injection machine is used. The second characteristic feature of the process of the present invention is that in order to manifest the above-mentioned multi-layer distribution structure by injection of this mixture, the thermoplastic resin and liquid crystal polyester are selected so that the melt viscosity of the thermoplastic resin, measured at a temperature higher by at least 10 °C than the higher temperature between the melting point of the thermoplastic resin and the flow-initiating point of the liquid crystal polyester and a shear rate of at least 1 x 10 $sec^{-1}$ , is higher than the melt viscosity of the liquid crystal polyester measured under the same conditions. If a mixture of the resin components having this difference of the melt viscosity is injected into an injection mold at a resin temperature giving this difference of the melt viscosity, the thermoplastic resin having a relatively high melt viscosity is mainly distributed on the surface side of the mold to form inner and outer layers and the liquid crystal polyester is mainly distributed in the central portion of the cavity of the mold to form an intermediate layer, and a large shear force is given to the liquid crystal polyester as the intermediate layer and a conspicuous flow orientation is given to the liquid crystal polyester. Namely, a considerably large shear force is imposed on the melted blend under conditions of molding such as melt injection when the melt is passed through a

nozzle or gate, and it is considered that a high flow orientation is caused in the liquid crystal polyester by this shear force and there is formed a distribution structure in which the flow-oriented melt is arranged and disposed in the central portion of the resin stream. As the result of such arrangement and distribution of the liquid crystal polyester, the crystallization nucleating agent-containing thermoplastic polyester is mainly present in both the surface portions of the wall of the vessel.

A two-resin three-layer laminate formed by supplying a liquid crystal polyester into an intermediate layer-injection machine, supplying a nucleating agent-containing thermoplastic polyester into an inner and outer layer-injection machine and co-injecting the resins, or by supplying a liquid crystal polyester into an intermediate layer extruder, supplying a nucleating agent-containing thermoplastic polyester into an inner and outer layer extruder and co-extruding the resins is defective as a molded article because interlaminar peeling is readily caused between the liquid crystal polyester and the nucleating agent-containing thermoplastic polyester. However, if a blend of both the resins is melt-injected, the liquid crystal polyester is predominantly present in the intermediate layer, the mixing ratio of the liquid crystal polyester is gradually reduced toward both the surfaces of the wall of the vessel and the thermoplastic polyester is predominantly present in the surface portions. It is considered that for this reason, interlaminar peeling is not caused between both the resins. Accordingly, in the process of the present invention, a multi-layer vessel in which the liquid crystal polyester is formed into the intermediate layer and is highly oriented in one axial direction and the thermoplastic resin is formed into inner and outer layers and is substantially unoriented is formed in the injection mold.

The multi-layer vessel of the present invention comprises a thermoplastic resin (heat-meltable thermoplastic resin other than a liquid crystal polyester) distributed in the form of a layer mainly in inner and outer surface portions (inner and outer layers) and a liquid crystal polyester distributed in the form of a layer mainly in the central portion (intermediate layer), and this multi-layer vessel is prominently characterized in that the liquid crystal polyester intermediate layer is present in the state substantially continuous in the plane direction of the vessel when seen in the thickness direction of the vessel wall and the liquid crystal polyester intermediate layer is molecularly oriented mainly in one axial direction, and the outer and inner layers of the thermoplastic resin are substantially unoriented.

The state where the intermediate layer is substantially continuous when seen in the thickness direction of the vessel wall includes (I) the case where the intermediate layer is present in the form of a continuous film, (II) the case where the intermediate layer is not in the form of a continuous film but is present in the form of many slices which are piled in the thickness direction at least in the edge portions thereof so that they are continuous in the plane direction when seen in the thickness direction, and (III) the state intermediate between (I) and (II) or the state where (I) and (II) are mingled.

The vessel obtained according to the present invention is characterized in that the intermediate layer of the liquid crystal polyester is present in the above-mentioned state (I), (II) or (III) and is molecularly oriented in one axial direction. Since the liquid crystal polyester is molecularly oriented in one axial direction, the gas permeation resistance is effectively improved and especially the oxygen permeation coefficient is most effectively reduced.

It is known that the oxygen permeation coefficient of a thermoplastic resin is generally reduced by the molecular orientation of the resin, and that as in case of a draw-blow-formed vessel, the gas permeation resistance is especially improved by biaxial orientation, that is, biaxial drawing. However, in case of a liquid crystal polyester, the gas permeation resistance is rather reduced by biaxial drawing. It is considered that the reason is that in the liquid crystal polyester, orientation is hardly caused in the direction (transverse direction) orthogonal to the main orientation direction, and the above-mentioned continuity in the plane direction cannot be maintained because the mechanical strength in the transverse direction is low. Furthermore, in case of a typical biaxial-draw-formed vessel of polyethylene terephthalate (PET), the oxygen permeation coefficient ($PO_2$) is reduced to about 1/2 of that of the undrawn vessel, but in case of the liquid crystal polyester, there can be attained an unexpected advantage that by monoaxial orientation, the oxygen permeation coefficient is reduced to less than 1/10 of that of the undrawn liquid crystal polyester.

Furthermore, in the present invention, it is possible to monoaxially orient the liquid crystal polyester layer while utilizing the flow orientation at the formation of a vessel, and any particular draw-orienting operation or equipment is not necessary and the gas permeation resistance and dynamic properties can be prominently improved.

In the vessel having the multi-layer distribution structure according to the present invention, since the liquid crystal polyester layer is interposed and the oxygen permeation coefficient of this intermediate layer is very small, the permeation of a gas through the wall of the entire vessel can be controlled. Furthermore, even if the intermediate layer is composed of slices as in the above-mentioned case (II), an excellent gas

permeation resistance is obtained. The reason is that the gas permeation passage is made long by accumulation of slices and an action similar to the action attained by increase of the thickness can be attained.

In the multi-layer vessel according to the present invention, from the viewpoint of the gas permeation resistance, it is important that the thermoplastic resin of the inner and outer layers should be substantially unoriented. For example, if the thermoplastic resin of the inner and outer layers is molecularly oriented by biaxial drawing or the like, also the liquid crystal polyester of the intermediate layer is elongated and the above-mentioned layer distribution structure (I), (II) or (III) is destroyed, resulting in reduction of the gas permeation resistance. In contrast, if the thermoplastic resin of the inner and outer layers is kept unoriented, the monoaxial orienting property of the liquid crystal polyester layer is maintained and also the layer distribution structure (I), (II) or (III) is maintained.

In the multi-layer vessel obtained according to the present invention, the liquid crystal polyester is oriented mainly in one axial direction. This does not mean that the liquid crystal polyester is oriented in the direction of the vessel axis in the strict sense of the word, but means that if the orienting characteristics are divided into the biaxial orienting characteristics and the monoaxial orienting characteristics, the latter orienting characteristics are predominant. Accordingly, it should be understood that from the viewpoint of the gas permeation resistance, it is not particularly important whether the practical orientation direction of the liquid crystal polyester is in agreement with the direction of the vessel axis or deviates from the direction of the vessel axis. Similarly, the expression that the thermoplastic resin is substantially unoriented means that the thermoplastic resin is included in the region of unorientation, rather than in the region of monoaxial orientation or biaxial orientation, and it should be understood that the thermoplastic resin may show a certain flow orientation at the molding step.

In the present invention, the improvement of the heat resistance, as well as the above-mentioned improvements, is intended. Namely, a further object of the present invention is to provide a packaging polyester vessel having a high gas barrier property for the preservation of a content and an excellent combination of the toughness and heat resistance required for a vessel for heating and cooking.

A still further object of the present invention is to provide a packaging polyester vessel composed of a blend of a crystalline thermoplastic resin and a liquid crystal polyester, in which the liquid crystal polyester is present in the form of an intermediate layer most desirable from the viewpoint of the gas barrier property or the vessel strength and the crystalline thermoplastic resin, especially a polyester, in the form of a surface layer having a controlled crystal structure most desirable from the viewpoint of the toughness or the heat resistance.

More specifically, according to the present invention, there is provided a heat-resistant polyester vessel composed of a blend of a crystalline thermoplastic resin composition containing a crystallization nucleating agent and a liquid crystal polyester, wherein the liquid crystal polyester is present in the form of a layer predominantly in the interior of the vessel wall, and preferably, the crystalline thermoplastic polyester has a crystallization degree of at least 10%.

The first characteristic feature of the heat-resistant vessel of the present invention is that the vessel is composed of a blend of a crystalline thermoplastic polyester composition containing a crystallization nucleating agent and a liquid crystal polyester. As pointed out hereinbefore, the liquid crystal polyester has a large melt flow orienting property and is excellent in the gas barrier property and mechanical strength. When this liquid crystal polyester alone is used for the formation of a vessel, since the orientation anisotropy of the liquid crystal polyester is very large, the mechanical strength is reduced in the flow direction of the resin.

In the present invention, by using the liquid crystal polyester in the form of a blend with a thermoplastic polyester containing a crystallization nucleating agent, the reduction of the mechanical strength in the flow direction can be overcome, and furthermore, there can be attained an advantage that as pointed out hereinbefore, the liquid crystal polyester layer is distributed in the form of a layer in the interior of the vessel wall. Still further, the intermediate layer of the liquid crystal polyester is present in the substantially continuous state when seen in the thickness direction.

Preferably, an inorganic filler such as talc, mica or a glass fiber is incorporated in an amount of at least 1% in the vessel of the present invention. An inorganic filler having an affinity with the liquid crystal polyester is preferably used, and the heat resistance is especially improved when the inorganic filler is incorporated in a larger amount in the crystalline polyester.

In the vessel of the present invention, from the following three points, it is important that the crystalline thermoplastic polyester forming a matrix should contain a crystallization nucleating agent. A most typical thermoplastic polyester can have a high crystallization degree but is defective in that the crystallization speed is low. If a crystallization nucleating agent is incorporated in such a polyester, in the first place the

crystallization speed of the polyester is increase and it sometimes happens that the crystallization of the polyester already starts in the injection mold, and high-precision molding becomes possible in the mold and removal from the mold without deformation becomes possible. In the second place, although thermal deformation of the vessel is caused before completion of the crystallization in the case where the polyester vessel is crystallized by a heat treatment, if the crystallization nucleating agent is incorporated into the polyester to increase the crystallization speed, high crystallization becomes possible prior to occurrence of thermal deformation, and since the heat treatment temperature can be lowered or the heat treatment time can be shortened, occurrence of thermal deformation can be prevented. In the third place, by incorporation of the crystallization nucleating agent, the attainable crystallization degree and the heat resistance should naturally be increased, and furthermore, coarsening of the size of formed crystals (sphaerites) can be prevented and the crystal size can be made fine and uniform, whereby the toughness and impact resistance of the vessel can be prominently improved.

In the vessel of the present invention, it is very important that the liquid crystal polyester should be contained. In the first place, the liquid crystal per se acts as a nucleating agent for promoting the conversion of the of the polyester to a liquid crystal, and in the second place, the liquid crystal polyester acts as a support for preventing thermal deformation of the polyester vessel at the time of crystallization and also acts as a support for drastically improving the heat resistance. It is surprising that the heat resistance is highly improved over the heat resistance of a crystallized polyester vessel (C-PET vessel).

In view of the foregoing, it will be understood that according to the present invention, there is provided a packaging polyester vessel having a high gas barrier property for preserving a content and being excellent in the combination of the toughness and heat resistance required for vessel for heating and cooking.

## Brief Description of the Drawings

Figs. 1 and 2 are sectional side views of vessels obtained according to the present invention.

Figs. 3-A, 3-B and 3-C are enlarged sectional views showing several examples of the sectional structures of walls of the vessels shown in Figs. 1 and 2.

Figs. 6-A, 6-B and 6-C are diagrams showing the sectional side photos of barrels of vessels obtained in Example 1, Comparative Example 1 and Example 2, respectively.

Figs. 4-A and 4-B are X-ray diffraction photos of vessel barrels irradiated vertically with X-rays.

Figs. 5-A and 5-B are X-ray intensity distribution curves.

Figs. 7-A and 7-B are melting curves measured by a differential scanning calorimeter, which are obtained at the first run and second run, respectively.

## Preferred Embodiments of the Invention

Referring to Fig. 1 illustrating an example of the vessel having a multi-layer distribution structure according to the present invention, this vessel 1 has a tray-like shape and comprises a short cylindrical or tapered barrel 2, a closed bottom 3 contiguous to the lower end of the barrel and a beaded or flanged open end 4 formed on the upper end of the barrel. A lid 5 is formed separately from this vessel 1, and this lid 5 is sealed to the beaded or flanged open end 4 by heat sealing or the like. Incidentally, a projection 6 located at the center of the closed bottom 3 corresponds to a gate of an injection mold.

Referring to Fig. 2 illustrating another example of the vessel having a multi-layer distribution structure, a vessel 1 has a shape of a cup or a seamless plastic can and comprises a cylindrical or tapered barrel 2, a closed bottom 3 and a beaded or flanged open end 4. Sealing between the vessel 1 and a lid 5 is accomplished by heat sealing or double seaming.

Referring to Figs. 3-A through 3-C showing sectional structures of walls of these vessels, the vessel wall 7 comprises inner and outer layers 8 and 9 where a substantially unoriented thermoplastic resin or a nucleating agent-containing thermoplastic polyester is mainly distributed and an intermediate layer 10 of a liquid crystal polyester sandwiched between these inner and outer layers and distributed in the central portion. The liquid crystal polyester constituting the intermediate layer is highly molecularly oriented mainly in one axial direction. For example, at the bottom 3, the liquid crystal polyester intermediate layer is molecularly oriented racially in one axial direction with the projection 6 of the gate being as the center, and at the barrel 7, the liquid crystal polyester intermediate layer is molecularly oriented monoaxially in the height direction of the vessel. Fig 3-A illustrates an embodiment where the liquid crystal polyester is present in the form of a film continuous in the plane direction. Fig. 3- illustrates an embodiment where the liquid crystal polyester is present in the form of many slices 12 arranged in the plane direction and at least edges of these slices 12 are piled in the thickness direction of the vessel wall. Fig. 3-C illustrates an

embodiment in which a continuous film 11 and slices 12 are copresent in such a state that the continuous film is located in the central portion of the intermediate layer and slices 12 are distributed on both the sides of the continuous film 11. Of course, in the multi-layer distribution structure vessel of the present invention, there can be adopted an embodiment in which in a certain portion of the vessel wall, the liquid crystal polyester is present as the continuous film 11 and in other portion of the vessel wall, the liquid crystal polyester is present in the form of an arranged aggregate of slices.

In the heat-crystallized resin vessel of the present invention, the liquid crystal polyester is monoaxially oriented. This fact can be confirmed by the X-ray diffractometry. Fig. 4-A is an X-ray diffraction photo obtained when the side wall of the barrel of the multi-layer distribution structure vessel of the present invention, that is, an injection-molded vessel obtained in Example 1 given hereinafter, which comprises inner and outer layers of polyethylene terephthalate and a liquid crystal polyester intermediate layer, is irradiated with X-rays in the direction vertical to the vessel wall. In this photo, the vertical direction corresponds to the axial direction of the vessel and the horizontal direction corresponds to the circumferential direction of the vessel. In this photo, a prominent interference spot attributed to the molecular orientation in the axial direction of the vessel appears, and the inner and outer layers of polyethylene terephthalate are substantially unoriented (this can be confirmed by the measurement of the orientation degree based on the fluorescent polarization and the infrared color ratio). Accordingly, it is obvious that the liquid crystal polyester is prominently monoaxially oriented. For comparison, the X-ray diffraction photo of the barrel of a vessel composed solely or PET is shown in Fig. 4-B.

The degree of the monoaxial orientation of the liquid crystal polyester can be evaluated based on the orientation degree (F) defined by the following formulae:

Orientation degree index

$$\sigma = \frac{\int_{0^\circ}^{90^\circ} I(\beta) \cdot \beta \, d\beta}{\int_{0^\circ}^{90^\circ} I(\beta) \, d\beta}$$

Orientation degree

$$F = \frac{45^\circ - \sigma}{45^\circ} \times 100$$

In the above-mentioned formulae, $I(\beta)$ represents the diffraction intensity observed when by using $CuK\alpha$ rays under an Ni filter, scanning is effected in the direction of the azimuth while setting the sample in the axial direction and fixing $2\theta$ at the angle ($2\Theta = 20^\circ$) of the strongest diffraction peak on the equator, and $\beta$ represents the azimuth.

Fig. 5-A shows X-ray intensity distribution curves obtained when $2\Theta$ is scanned in the range of from $15^\circ$ to $40^\circ$ with respect to the samples of Figs. 4-A and 4-B, and Fig. 5-B shows an X-ray intensity distribution curve obtained when the azimuth $\beta$ is scanned from $0^\circ$ to $360^\circ$ while fixing $2\Theta$ at $20^\circ$) with respect to the sample of Fig. 4-A.

In the multi-layer distribution structure vessel of the present invention, the liquid crystal polyester intermediate layer has generally an orientation degree (F) of at least 50%, preferably at least 70%. The oxygen permeation coefficient $PO_2$ (LCP) of the liquid crystal polyester is expressed by the following formula based on the supposition that the liquid crystal forms an intermediate layer in the multi-layer structure ideally according to the composition ratio:

$$\frac{1}{PO_2} = \frac{\text{composition ratio of PET}}{PO_2(PET)} + \frac{\text{composition ratio of LCP}}{PO_2(LCP)}$$

wherein $PO_2$ represents the oxygen permeation coefficient of the entire mixture, $PO_2(PET)$ represents the oxygen permeation coefficient of PET, and $PO_2(PET)$ represents the oxygen permeation coefficient of PET, and $PO_2(LCP)$ represents the oxygen coefficient of LCP.

Even at the same composition ratio (for example, the ratio of LCP is 20%), if the orientation degree (F) is about 50%, the oxygen permeation coefficient ($PO_2$) is $1 \times 10^{-12}$ cc•cm/cm$^2$•sec•cmHg, but if the orientation degree (F) is higher than 70%, the oxygen permeation coefficient is reduced below $1 \times 10^{-13}$ cc•cm/cm$^2$•sec• cmHg. Accordingly, it is understood that the oxygen permeation coefficient can be improved by the orientation. This is similarly observed when a nucleating agent-containing thermoplastic or a nucleating agent-containing thermoplastic polyester is used.

As pointed out hereinbefore, in the multi-layer distribution structure vessel of the present invention, the inner and outer layers of the thermoplastic resin are substantially unoriented. This thermoplastic resin can take various states of from the amorphous state to the highly crystallized state from the viewpoint of the X-ray diffractometry or the density-crystal method. In general, a crystalline thermoplastic resin has an inherent crystallization temperature region between the temperature just below the melting point and the glass transition point (Tg). Accordingly, heat crystallization can be accomplished to various degrees by heat-treating the resin at temperatures within this region. If the crystalline thermoplastic resin is heat-crystallized, the heat resistance and rigidity are prominently improved. Therefore, this vessel can be utilized as a packaging vessel that can be re-heated or cooled in an oven toaster, an electronic range or the like.

The vessel of the present invention is prepared by melt-injecting a mixture comprising a thermoplastic resin and a liquid crystal polyester, in which the melt viscosity of the thermoplastic resin, measured at a temperature higher than the melting points of the thermoplastic resin and liquid crystal polyester and higher by at least 10 °C than the higher flow-initiating temperature and a shear rate of $1 \times 10^5$ sec$^{-1}$, is higher than the melt viscosity of the liquid crystal polyester, into a cooled vessel-forming injection mold at a temperature giving said difference of the melt viscosity, to form in the mold a multi-layer distribution structure comprising the thermoplastic resin distributed mainly in inner and outer surface layers and the liquid crystal polyester distributed mainly in a central portion.

The process for the preparation of a liquid crystal polyester multi-layer distribution structure vessel is first characterized in that a mixture of a liquid crystal polyester and a thermoplastic resin is used. Namely, in the case both the components are used in the form of a mixture, it is sufficient if a single injection machine is used, and the injection operation can be simplified. The second characteristic feature of the preparation process is that in order to manifest the above-mentioned multi-layer distribution structure by injection of this mixture, the thermoplastic resin and liquid crystal polyester are selected so that the melt viscosity of the thermoplastic resin, measured at a temperature higher than the melting points of the thermoplastic resin and liquid crystal polyester and higher by at least 10 °C than the higher flow-initiating temperature and a shear rate of $1 \times 10^5$ sec$^{-1}$ , is higher than the melt viscosity of the liquid crystal polyester. If a mixture having this difference of the melt viscosity is injected into a cooled injection mold at a resin temperature giving this difference of the melt viscosity, he thermoplastic resin having a relatively high melt viscosity is distributed in the surface portion of the mold to form inner and outer layers and the liquid crystal polyester having a relatively low melt viscosity is distributed in the central portion of the cavity to form an intermediate layer, and a large shear force is applied to the liquid polyester of the intermediate layer by the inner and outer layers of the thermoplastic resin to give a prominent flow orientation to the liquid crystal polyester. According to the process of the present invention, a multi-layer distribution structure vessel in which the liquid crystal polyester is formed into an intermediate layer and is highly monoaxially oriented and the thermoplastic resin is formed into inner and outer layers and is substantially unoriented is formed in the injection mold.

(1) Liquid Crystal Polyester

As the liquid crystal polyester, there can be mentioned thermoplastic liquid crystal polyesters such as a polyester derived from an aromatic dicarboxylic acid component and an aromatic diol component by

polycondensation, a polyester obtained by polycondensation of an aromatic hydroxycarboxylic acid, a copolyester of the foregoing two polyesters, and a copolyester of a polyester as mentioned above with polyethylene terephthalate.

The ratio of the divalent aromatic groups to the divalent hydrocarbon groups in all the ester recurring units is 50%, for example, in case of polyethylene terephthalate, but in the liquid crystal polyester used in the present invention, it is preferred that this ratio be in the range of from 50 to 100%.

As preferred examples of the liquid crystal polyester, there can be mentioned, (I) a polyester comprising the following recurring units:

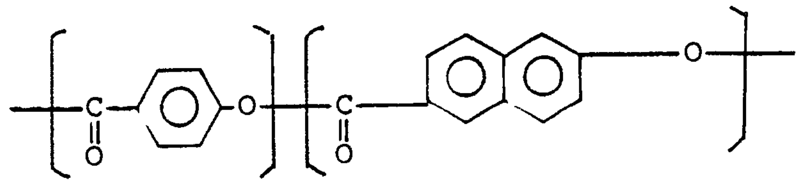

such as Vectra supplied by Celanese, (II) a polyester comprising the following recurring units:

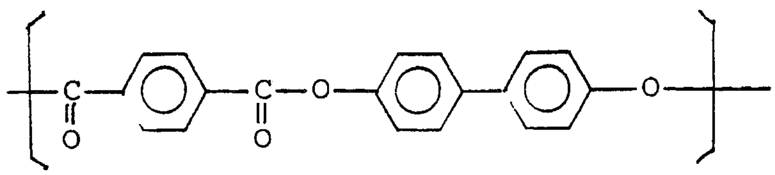

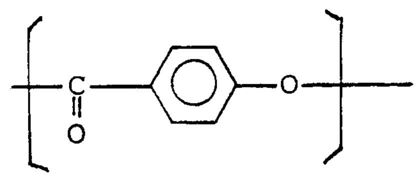

such as Zydar supplied by Dartco, (III) polyphenylhydroquinone terephthalate comprising the following recurring units:

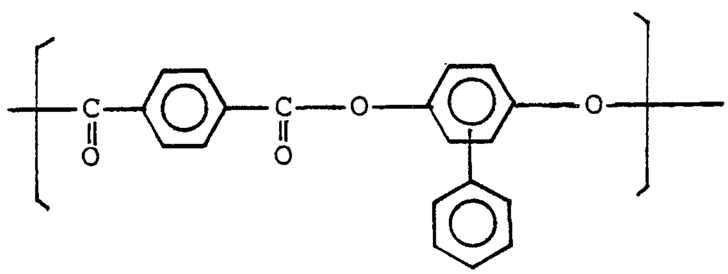

and a PHB/PET copolymer comprising the following recurring units:

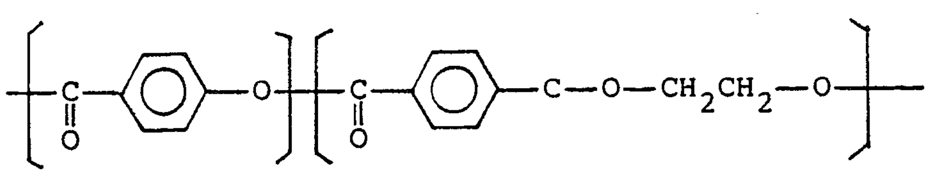

though liquid crystal polyesters that can be used are not limited to those mentioned above.

The liquid crystal polyester used in the present invention should have a film-forming molecular weight,

and a liquid crystal polyester heat-formable at a temperature of 200 to 400° C is generally preferably used.

(2) Thermoplastic Resin

The thermoplastic resin to be used in combination with the liquid crystal polyester is an ordinary thermoplastic polyester customarily used for melt forming of vessels. As the thermoplastic resin, there can be mentioned thermoplastic polyesters derived from aromatic dicarboxylic acids and aliphatic diols, such as polyethylene terephthalate, polybutylene terephthalate and polyethylene naphthalate, polyarylates derived from aromatic dicarboxylic acids and bisphenols such as bisphenol A, carbonates such as 2,2-bis(4-hydroxyphenyl)propane-carbonate, polyamides such as nylon 6, nylon 66, nylon 46, polymetaxylene adipamide and polyhexamethylene terephthalamide, ultra-high-molecular-weight olefin resins such as ultra-high-molecular-weight polypropylene, propylene/ethylene copolymer and poly-4-methylpentene-1, and blends of two or more of the foregoing resins. Among these resins, polyethylene terephthalate is most preferable.

The kind and molecular weight of the thermoplastic resin used in the present invention should be such that the melt viscosity of the thermoplastic resin, measured at a temperature higher than the melting points of the thermoplastic resin and liquid crystal polyester and higher by at least 10° C than the higher flow-initiating temperature and a shear rate of 1 x $10^5$ $sec^{-1}$ is higher than the melt viscosity of the liquid crystal polyester. In general, in view of the injection formability and the effective molecular orientation, it is preferred that the difference between the melt viscosity of the thermoplastic resin and the melt viscosity of the liquid crystal polyester be 1 to 1,000 P, especially 50 to 500 P. If the difference is too small and below the above range, the degree of the molecular orientation of the liquid crystal polyester is often insufficient, and if the difference is too large and exceeds the above range, the injection formability tends to lower. Accordingly, in case of polyethylene terephthalate, a polymer having a molecular weight of the extrusion grade is preferable to a polymer having a molecular weight of the injection grade, and in general, polyethylene terephthalate having an intrinsic viscosity (I.V.) of at least 0.71 dℓ/g, especially 0.75 to 1.20 dℓ/g, is preferably used.

As the crystalline thermoplastic polyester to be used in combination with the liquid crystal polyester, there can be mentioned thermoplastic polyesters derived from aromatic dicarboxylic acids and aliphatic diols, especially thermoplastic polyesters comprising recurring units represented by the following formula:

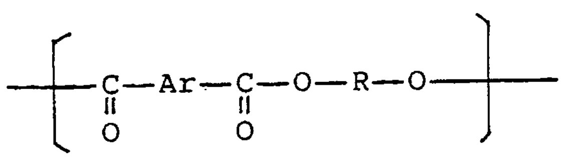

(5)

wherein Ar represents a divalent aromatic group and R represents a divalent aliphatic group, especially an alkylene group,
such as polyethylene terephthalate and polybutylene terephthalate. Polyethylene terephthalate of a thermoplastic polyester composed mainly of ethylene terephthalate units is preferably used as the thermoplastic polyester for attaining the objects of the present invention. As the dicarboxylic acid component forming ester units other than ethylene terephthalate units, there can be mentioned isophthalic acid, naphthalene-dicarboxylic acid, bis(4-carboxyphenyl)methane, 2,2-bis(4-carboxyphenyl)propane, cyclohexane-dicarboxylic acid, adipic acid, sebacic acid, succinic acid and dodecane-dicarboxylic acid. As the diol component, there can be mentioned diethylene glycol, propylene glycol, 1,4-butanediol, 1,6-hexanediol, neopentyl glycol, cyclohexane dimethanol and xylylene glycol. The copolyester may be either a random copolyester or a black copolyester, and a copolyester in which at least 20 mole%, especially at least 30 mole%, of the dicarboxylic acid component is occupied by terephthalic acid and at least 20 mole%, especially at least 30 mole%, of the diol component is occupied by ethylene glycol is preferably used. An ethylene terephthalate/butylene terephthalate block copolymer comprising ethylene terephthalate blocks and butylene terephthalate blocks at a molar ratio of from 70/30 to 100/0, especially from 80/20 to 100/0, is preferably used in view of the high crystallinity. In view of the balance among the melt injection formability, mechanical characteristics and heat resistance, it is preferred that the thermoplastic polyester used in the present invention should have an intrinsic viscosity (I.V.) of 0.5 to 1.5 dℓ/g, especially 0.6 to 1.4 dℓ/g.

In general, an ethylene terephthalate type polyester of the extrusion grade (I.V. = 0.75 to 1.4) is excellent over an ethylene terephthalate type polyester of the injection grade in the manifestation of the multi-layer distribution structure of the liquid crystal polyester. Preferably, the thermoplastic polyester has

an arrival crystallization degree of 10 to 50%, especially 10 to 45%, as determined by the thermal method.

(3) Inorganic, organic and polymeric nucleating agents can be used singly or in the form of mixture of two or more them as the crystallization nucleating agent. Appropriate examples are described below, through nucleating agents that can be used are not limited to those exemplified below.

Inorganic nucleating agents

Silica, alumina, silica-alumina, silicates such as calcium silicate, kaolin, attapulgite, montmorillonite, halloysite, talc, barium sulfide, calcium sulfate, calcia, zinc flower, oxides such as titania, finely divided metals, carbon black and phosphates.

Organic nucleating agents

Alkali metal, zinc and aluminum salts of higher fatty acids having 7 to 30 carbon atoms and aromatic carboxylic acids, such as sodium benzoate, zinc stearate, calcium stearate, calcium montanate, behenic acid salts, arachic acid salts, palmitic acid salts, aluminum phenyl acetate and sodium cinnamate.

Polymeric nucleating agents

Polyethylene wax, polypropylene wax, oxidized polyethylene wax, low-density polyethylene, medium-density polyethylene, high-density polyethylene, polypropylene, acid- and acid anhydride-modified polypropylenes, ethylene/acrylic acid ester copolymers, ethylene/vinyl acetate copolymers, ion-crosslinked olefin copolymers (ionomers), polycaprolactam and metal salts of polyesters.

The crystallization nucleating agent acts on polymer chains making a thermal motion in a polymeric melt to reduce the super-cooling degree of the crystallization, increases the number of spherulites to make the spherulites finer and exerts a function of increasing the entire crystallization speed. For the crystallization nucleating agent-containing polyester of the present invention, both of the crystallization at the step of cooling the melt and the crystallization at the step of heat-treating the formed article are important. In the present invention, a nucleating agent in which the half-increasing time of the crystallization at 220° C at the dropping of the temperature (the time required for arrival at 1/2 of the highest arrival crystallization degree) is shorter than 10 minutes, especially shorter than 8 minutes, and the half-increasing time of the crystallization at 120° C at the elevation of the temperature is shorter than 4 minutes, especially shorter than 3 minutes, is preferably used. From this viewpoint, olefin resin type nucleating agents and clay type nucleating agents such as silica, titania and talc are preferred. The amount of the nucleating agent added to the thermoplastic polyester differs according to the kind of the nucleating agent and the required physical properties, but the amount added of the nucleating agent is ordinarily 0.05 to 50 parts by weight, especially 0.1 to 40 parts by weight, per 100 parts by weight of the polyester. The inorganic nucleating agent is excellent in the property of increasing the crystallization speed but tends to render the crystallized polyester brittle to some extent. In contrast, the polymeric nucleating agent s effective for improving the toughness of the heat-crystallized polyester. In view of the foregoing, it is preferred that polymeric nucleating agent, especially an olefin resin type nucleating agent, be used in an amount occupying at least 1% by weight, especially at least 10% by weight, of the total amount of the nucleating agents used.

The nucleating agent-incorporated vessel of the present invention is prepared by forming in a mold a multi-layer distribution structure comprising a thermoplastic polyester distributed mainly in the inner and outer surface portions and a liquid crystal polyester distributed mainly in the interior portion of the vessel, and heat-treating this structure at a crystallization temperature of the thermoplastic polyester to crystallize the thermoplastic polyester so that the crystallization degree is at least 10%, especially at least 20%.

The mixing ratio between the liquid crystal polyester and the thermoplastic polyester or nucleating agent-containing thermoplastic polyester has serious influences on the gas permeation resistance of the final vessel, the strength and heat resistance of the vessel, the thickness uniformity of the vessel and the appearance characteristics. Namely, if the mixing ratio of the liquid crystal polyester is too low, the improvement of the gas permeation resistance is insufficient, and if the mixing ratio of the thermoplastic resin is too law, the strength and other properties are degraded by the anisotropy of the liquid crystal polyester. In the present invention, it is preferred that based on the two components, the amount of the liquid crystal polyester be 1 to 99% by weight, especially 3 to 97% by weight, particularly especially 5 to 95% by weight, with the balance being the thermoplastic resin.

(Injection Molding)

In the present invention, the liquid polyester and the thermoplastic resin or nucleating agent-containing thermoplastic polyester are supplied in the form of a mixture to a hopper of an injection machine. The mixture may be a dry blend or melt blend of both the resins. Dry blending can be performed by a mixer such as a ribbon blender, a conical blender or a Henschel mixer, and melt kneading can be performed by a single-screw or twin-screw extruder, a kneader, a Banbury mixer or a roll. In view of the operation easiness and the easiness in the manifestation of the multi-layer distribution structure, use of a dry blend is recommended.

In the formation of a multi-layer vessel, the above-mentioned mixture is melt-injected into an injection mold at a temperature giving a predetermined difference of the melt viscosity. A known injection machine equipped with an injection plunger or screw is used, and the mixture is injected into the injection mold mold through a nozzle, a spray and a gate. By this injection, the above-mentioned multi-layer distribution structure is formed in the resin stream, and simultaneously, a prominent flow orientation is imparted to the liquid crystal polyester. The resin stream flows into an injection cavity in this state and is cooled and solidified to form a multi-layer distribution structure vessel of the present invention. An injection mold having a cavity corresponding to the vessel shape is used, but in order to fix the above-mentioned flow orientation as the monoaxial orientation, a one-gate type injection mold is preferably used.

The injection mold is opened, and the multi-layer distribution structure vessel is taken out from the mold. The recovered vessel can be directly supplied as a packaging vessel to a user. However, in general, it is preferred that the injection-formed multi-layer distribution structure vessel be heat-treated. This heat treatment exerts two functions. In the first place, the thermoplastic resin of the inner and outer layers is crystallized, and in the second place, the monoaxially oriented intermediate layer of the liquid crystal polyester is thermally set. By heat-crystallizing the thermoplastic resin within a range described below, the heat resistance of the inner and outer layers of the vessel is prominently improved, and deformation at the retort sterilization or cooking and migration of the resin into the content can be effectively prevented. In case of polyethylene terephthalate, for attaining this object, the heat crystallization is preferably carried out to such an extent that the crystallization degree determined by the density method is at least 10%, especially at least 20%. By the thermal setting or heat treatment of the liquid crystal polyester of the intermediate layer, the oxygen permeation resistance of the vessel is improved and dynamic properties such as the tensile strength and elastic modulus are improved, and furthermore, the retention ratios of the strength and elastic modulus at high temperature are improved. This heat treatment is especially preferable when the nucleating agent-containing thermoplastic polyester is used. The heat treatment is not an indispensable requirement, but preferably, this heat treatment is carried out.

Many changes and modifications can be made to the multi-layer distribution structure and preparation process of the present invention without departing from the spirit of the present invention. For example, there can be adopted a method in which a mixture of the liquid crystal polyester and thermoplastic resin is supplied into an injection machine for an intermediate layer, the thermoplastic resin is supplied into an injection machine for inner and outer layers, and co-injection is carried out. It will be understood that in this case, the above-mentioned multi-layer distribution structure is manifested in the intermediate layer.

(Effect of the Invention)

In the multi-layer distribution structure vessel of the present invention, the liquid crystal polyester is distributed as an intermediate layer and the thermoplastic resin is distributed as inner and outer layers protecting the intermediate layer, and the liquid crystal polyester is highly monoaxially oriented, whereby the gas permeation resistance is prominently improved. Furthermore, since the oriented layer of the liquid crystal polyester has a very high modulus of elasticity and a very high strength, the vessel of the present invention is valuable as a pressure-resistant vessel for storing beer, a carbonated drink, and aerosol product and the like. Moreover, since the vessel shows an excellent gas permeation resistance even under a high humidity condition, the vessel is especially excellent in the content-preserving property.

In the case where a nucleating agent-containing thermoplastic polyester is used, the polyester of the inner and outer layers is highly crystallized to shown a high heat resistance and a high strength, and therefore, the inner and outer layers of this polyester act as a support in the liquid crystal polyester multi-layer distribution structure vessel. Accordingly, this vessel is excellent in the heat resistance and is valuably used as a vessel for hot-filling a content or heat-sterilizing a content, or as a vessel for heating and re-cooking a content.

Accordingly, a lid member can be sealed to this vessel by heat sealing or double seaming, and the vessel of the present invention can be utilized as a sealed vessel having excellent gas permeation

resistance and heat resistance.

(Examples)

The present invention will now be described in detail with reference to the following examples. In the examples and comparative examples given hereinafter, the characteristics and properties of vessel materials and vessels were determined according to methods described below.

(a) Intrinsic Viscosity (I.V.) of PET

In 40 ml of a phenol/tetrachloroethane mixed solvent (1/1 weight ratio) was incorporated 0.2 mg, precisely weighed, of a sample, and the mixture was stirred at 135 °C to form a solution. In a constant-temperature water bath maintained at 30 °C, the viscosity of the solution was measured by a Ubbellohde viscometer, and the specific viscosity was determined from the measured viscosity and the intrinsic viscosity ($\eta$) was calculated from the specific gravity.

Relative viscosity $\eta_{rel} = t/t_o$

in which t represents the dropping time (second) of the solution and $t_o$ represents the dropping time (second) of the solvent.

Specific gravity $\eta_{sp} = \eta_{rel} - 1$

$$\text{Intrinsic viscosity } (\eta) = \frac{-1 \sqrt{1 + 4k\eta_{sp}}}{2kc}$$

in which k represents Huggins' constant (0.33) and c represents the concentration (g/100 ml) of the solution.

Water was sufficiently removed from the materials used, and the measurement was carefully carried out so that the moisture absorption was not caused.

(b) The shear rate and melt viscosity $\eta$ (poise) were determined by using a capillary flow characteristic tester for melted polymers (Capillograph 1B supplied by Toyo Seiki Seisakusho).

(1) Shear stress $\tau = Pr/2L$ (dyne/cm$^2$)

(2) Shear rate $\gamma = 4Q/\pi R^3$ (sec$^{-1}$)

(3) Melt viscosity $\eta = \tau/\gamma$ (poise = dyne•sec/cm$^2$)

In these formulae, P represents the inner pressure (dyne/cm$^2$) of the barrel, R represents the radius (cm) of the capillary, L represents the length (cm) of the capillary, and Q represents the flow-out volume speed (cm$^3$/sec).

(c) Injection Forming Machine

An injection molding machine, Model FS-75NIII (supplied by Nissei Jushi Kogyo), was used.

(d) Injection Conditions

The injection molding was carried under the following conditions (set values).

Cylinder temperature: 290 °C
Mold temperature: 30 °C
Injection pressure: 25% to 90%
Injection speed: 50%
Mold: cup having a thickness of 0.8 mm
Injection time: 5 seconds
Cooling time: 10 seconds

(e) Oxygen Permeability ($QO_2$)

An oxygen concentration-measuring device, a heat-sealing device and a cup sample were placed in a deaerating box, and $N_2$ was introduced at a rate of about 10 m$^3$/min into the deaerating box and superfluous air was discharged through an exhaust pipe. When the oxygen concentration became below 0.02%, an aluminum lid was heat-sealed to the cup charged with 1 cc of water. After completion of the heat sealing, a septum was bonded to the lid through a silicone adhesive. The assembly was allowed to stand still in a thermohygrostat for a certain period, and a syringe was inserted through the septum. A predetermined amount of the gas was taken out and analyzed by a gas chromatograph. The oxygen concentration was measured with the lapse of time and when the increase of the oxygen permeation quantity became constant, the temperature was measured and the oxygen permeability $QO_2$ - (cc/m$^2$•day•atm) was calculated.

(f) Density and Mixing Ratio

An n-heptane/carbon tetrachloride type density gradient tube (supplied by Ikeda Rika) was prepared, and the density of a sample was determined under a condition of 20°C. The mixing ratio (%) of the resin was calculated from the density (g/cm$^3$). The calculation was made based on the supposition that when PET was amorphous, LCP was crystallized completely (100%).

(g-1) An n-heptane/carbon tetrachloride type density gradient tube (supplied by Ikeda Rika) was prepared, and the density of a sample was determined under a condition of 20°C. From the measured density, the crystallinity Xc (%) was calculated according to the following formula:

$$\text{Crystallinity Xc} = \frac{\rho c}{\rho} \frac{(\rho - \rho am)}{(\rho c - \rho am)} \times 100$$

wherein $\rho$ represents the measured density (g/cm$^3$), $\rho_{am}$ represents the amorphous density (1.335 g/cm$^3$), and $\rho_c$ represents the crystal density (1.455 g/cm$^3$).

In case of a blend, based on the supposition that LCP was crystallized completely (100%), only the density of PET was calculated from the mixing ratio and regarded as the measured density.

(g-2) Crystallinity Xc

The measurement of the crystallinity was carried out by using a differential scanning calorimeter (DSC-2 supplied by Parkin-Elmer) and indium as a reference sample. Correction of the base line or calculation of the calorific value were performed by utilizing a computer system built in the apparatus. The sample weight was 3 to 5 mg and each of the temperature-elevating and temperature-dropping rates was 10°C/min. the measurement was conducted in a nitrogen current.

The temperature-elevating curve of the collected sample was measured in the region of from room temperature (25°C) to the temperature close to the level of melting point (Tm) + 30°C (measurement (1)), and the crystallization heat S1 and the crystal-melting heat S2 were determined. In case of the crystallization nucleating agent-containing polyethylene terephthalate (abbreviated to "C-PET"), for example, when polyethylene was used as the crystallization neucleating agent, the crystal-melting peak and the peak S1 overlapped each other at the elevation of the temperature, and it was impossible to measure S1 precisely (Fig. 7-A). In this case, the sample heated to the temperature close to the level of Tm + 30°C was gradually cooled to room temperature at a temperature-dropping rate of 10°C/min, and then, the temperature-elevating curve was measured again (measurement (2)). From the results of measurement (2), the crystal-melting heat S3 of the crystallization nucleating agent was determined (Fig. 7-B). The sum S4 of S1 and S3 was newly set as the crystal-melting heat of the sample. S4 and S2 determined in the above-mentioned method were corrected while taking the mixing ratio of the liquid crystal into consideration, and the crystallinity Xc was calculated by using the obtained values S4' and S2' according to the following formula:

$$\text{Crystallinity Xc (\%)} = \frac{(|S2'| - |S4'|)}{29} \times 100 \qquad (1)$$

wherein |S2'| represents the absolute value of the corrected crystal-melting heat (cal/g), [S4'] represents the absolute value of the corrected crystallization heat (cal/g), and 29 is the crystal-melting heat (cal/g) of completely (100%) crystallized polyethylene terephthalate.

(h) Orientation Degree

According to the ball figure method using an X-ray diffraction apparatus (Geiger Flex RAD-8 supplied by Rigaku Denki Kogyo), the sample was set in the axial direction and the angle 2θ was fixed at the strongest diffraction peak on the equator under CuKα rays through an Ni filter, and the sample was rotated in the azimuth direction in the range of from $\beta = 0°$ to $\beta = 90°$ to obtain an intensity distribution curve. The orientation degree index and orientation degree were defined as follows.

$$\text{Orientation Degree Index } \sigma = \frac{\int_{0^\circ}^{90^\circ} I(\beta)\cdot\beta d\beta}{\int_{0^\circ}^{90^\circ} I(\beta)\, d\beta}$$

$$\text{Orientation Degree F} = \frac{45^\circ - \sigma}{45^\circ} \times 100$$

Incidentally, $I(\beta)$ represents the diffraction intensity observed when the azimuth was scanned at the position of the diffraction peak $2\theta = 20^\circ$ in the direction of the equator, and $\beta$ represents the azimuth. The base line was set at the intensity of the minimum peak of the diffraction intensity.

As the orientation degree F is close to 0%, the orientation is weak, and as the orientation degree F is close to 100%, the orientation is strong.

(i) Observation of Distribution State of Liquid Crystal

Small pieces were collected from the vessel in the flow-in direction of the resin and the direction orthogonal thereto, and sections were thinly shaved by a microtome and photographed under a stereomicroscope. The distribution state of the liquid crystal was examined from the photo.

(j) Flow-Initiating Temperature

By using a Koka-type flow tester supplied by Shimazu Seisakusho, the flow-initiating temperature of a sample resin was measured under the following conditions.

Sectional area of plunger: 1 $cm^2$

Applied pressure: 10 to 500 $kg/cm^2$

Constant temperature-elevating rate: 80 to 320 °C

Die (hole diameter x hole length): 1 mm x 10 mm

The temperature at which the plunger which had passed through the stop region after arrival at the softening temperature by the constant-rate temperature-elevating method began to apparently drop again was defined as the flow-initiating temperature.

(k) Observation of Distribution State of Liquid Crystal

Small pieces were collected from the vessel in the flow-in direction of the resin and the direction orthogonal thereto, and sections were thinly shaved by a microtome and photographed under a stereomicroscope. The distribution state of the liquid crystal was examined from the photo.

(n) Mixing Ratio of Nucleating Agent

Nucleating agent-free polyethylene terephthalate (abbreviated to "PET") and a polymeric liquid crystal (abbreviated to "LCP") were dry-blended at a known mixing ratio, and the blend was dried at 140 °C for more than 5 hours in a moisture-removing hopper drier to remove water sufficiently. The resin blend held for 10 minutes in a hot press where the temperature was set so that the resin temperature was 290 °C to melt the resin blend. Immediately, the melt was thrown into water to form a sheet having a thickness of about 0.5 mm. In the above-mentioned manner, sheets differing in the mixing ratio were prepared, and the crystal-melting heat was determined according to the above-mentioned method (e). The obtained crystal melting heats were plotted relatively to the mixing ratio of LCP. The mixing ratios in respective samples were calculated based on the obtained calibration curve.

## Example 1

A pellet of polyethylene terephthalate (SA-1206 supplied by Unitica: I.V. = 1.07; abbreviated to "PET") and a pellet of a liquid crystal polyester (A-950 supplied by Celanease; abbreviated to "LCP") were mixed and dry-blended at a mixing ratio shown in Table 1 (A through D in Table 1). The mixture was dried at 140 °C for more than 5 hours in a moisture-removing hopper drier to remove water sufficiently. The mixture was melt-injected by an injection forming machine having a mold-clamping force of 75 tons, the temperature of which was set so that the resin temperature was 290 to 310 °C, whereby a vessel as shown in Fig. 2 was formed. The obtained vessel was glossy and had an appearance where LCP was uniformly dispersed.

For comparison, PET and LCP used were independently melt-injected in the same manner as described above to form vessels as shown in Fig. 2.

The melt viscosities of PET and LCP measured at a temperature of 290° C and a shear rate of 1 x $10^5$ $sec^{-1}$ were 2.0 x $10^2$ poise and 1.3 x $10^2$ poise, respectively.

With respect to each of the obtained vessels, the density, mixing ratio, orientation degree index and oxygen permeability were determined. The obtained results are shown in Table 1. At other mixing ratios, similar layer structures were observed. A diagram of the photo of the distribution of the liquid crystal, obtained according to the above-mentioned method (i), is shown in Fig. 6-A. It is considered that the barrier property was obtained by the orientation of the liquid. crystal in the form of a layer.

Comparative Example 1

A dry blend was prepared by mixing 80 parts by weight of a pellet of polyethylene terephthalate MEH-2031 supplied by Unitica; I.V. = 0.70; abbreviated to "PET") and 20 parts by weight of a liquid crystal polyester (A-950 supplied by Celanease; abbreviated to "LCP"). The dry blend was dried at 140° C for more than 5 hours in a moisture-removing hopper drier to remove water sufficiently and the mixture was melt-injected by an injection forming machine having a mold-clamping force of 75 tones, the temperature of which was adjusted so that the resin temperature was 290 to 310° C, whereby a vessel as shown in Fig. 2 was formed. Certain aggregation of LCP was observed on the obtained vessel, and an appearance in which LCP was uniformly dispersed was not obtained. It is considered that since the melt viscosity of PET was low under the forming conditions (0.8 x $10^2$ poise as measured at a temperature of 290° C and a shear rate of 1 x $10^5$ $sec^{-1}$), LCP was not sufficiently dispersed and a good appearance was not manifested.

With respect to each of the vessels formed in the foregoing example and comparative example, the density, mixing ratio, orientation degree and oxygen permeability were determined. The obtained results are shown in Table 1. A diagram of the photo of the distribution state of the liquid crystal is shown in Fig. 6-B. Incidentally, the density, mixing ratio, orientation degree and distribution state were measured with respect to a sample collected from a central part of the barrel wall of the cup.

Table 1

| Mark | Composition Ratio (% by weight) of PET | Composition Ratio (% by weight) of LPC | Density ($g/cm^2$) | Mixing Ratio (%) | Orientation Degree (%) | Gas Permeability $QO_2$ ($cc/m^2 \cdot 24hrs \cdot atm$) |
|---|---|---|---|---|---|---|
| A | 80 | 20 | 1.3503 | 21.16 | 74.96 | 0.316 |
| B | 85 | 15 | 1.3465 | 14.88 | 73.44 | 0.828 |
| C | 90 | 10 | 1.3450 | 12.40 | 72.38 | 1.868 |
| D | 65 | 35 | 1.3565 | 31.40 | 76.47 | 0.067 |
| PET | 100 | 0 | 1.3375 | 0 | 0 | 4.067 |
| LCP | 0 | 100 | 1.3980 | 100 | 78.11 | 0.013 |
| Comparative Example | 80 | 20 | 1.3480 | 17.36 | 40.69 | 2.959 |

From the table and photo diagrams, it is understood that if the liquid crystal was not distributed in the form of a layer, the orientation degree was low and the gas permeability was low. Furthermore, aggregation of LCP was observed in the comparative example, though this aggregation was not found in the example.

Example 2

A pellet of polyethylene terephthalate (SA-1206 supplied by Unitica; I.V. = 1.07; abbreviated to "PET") and a pellet of a liquid crystal polyester (LC-3000 supplied by Unitica; abbreviated to "LCP") were mixed and dry-blended at a mixing ratio shown in Table 2. The mixture was dried at 120 °C for more than 5 hours in a moisture-removing hopper drier to remove water sufficiently. The mixture was melt-injected by an injection forming machine having a mold-clamping force of 75 tons, the temperature of which was set so

that the resin temperature was 290 to 310 °C, whereby a vessel as shown in Fig. 2 was formed. The obtained vessel was glossy and had an appearance where LCP was uniformly dispersed.

For comparison, PET and LCP used were independently melt-injected in the same manner as described above to form vessels as shown in Fig. 2.

The melt viscosities of PET and LCP measured at a temperature of 290 °C and a shear rate of 1 x $10^5$ $sec^{-1}$ were 2.0 x $10^2$ poise and 1.7 x $10^2$ poise, respectively.

With respect to each of the obtained vessels, the density, mixing ratio, orientation degree index and oxygen permeability were determined. The obtained results are shown in Table 2. A diagram of the photo of the distribution of the liquid crystal in the example (the mixing ratio was 20%) is shown in Fig. 6-C.

Incidentally, the density, mixing ratio, orientation degree and distribution state were measured with respect to a sample collected from a central part of the barrel wall of the cup. It is considered that the barrier property was obtained by the orientation of the liquid crystal in the form of a layer.

Table 2

| Mark | Composition Ratio (% by weight) of PET | Composition Ratio (% by weight) of LPC | Density (g/cm$^2$) | Mixing Ratio (%) | Orientation Degree (%) | Gas Permeability $QO_2$ (cc/m$^2$·24hrs·atm) |
|---|---|---|---|---|---|---|
| Example 2 A | 80 | 20 | 1.3475 | 19.61 | 56.76 | 1.463 |
| B | 85 | 15 | 1.3447 | 14.14 | 54.29 | 2.220 |
| C | 90 | 10 | 1.3437 | 12.16 | 54.47 | 2.917 |
| PET | 100 | 0 | 1.3375 | 0 | 0 | 4.067 |
| LCP | 0 | 100 | 1.3885 | 0 | 70.09 | 0.088 |

Example 3

The vessel formed in Example 1 was heat-crystallized at 140°C. When the mixing ratio of LCP was high (for example, the mixing ratio of LCP was 35%), even if PET was amorphous, the appearance of the vessel was not changed at a high temperature (180°C). When the mixing ratio of LCP was low (for example, 10%), if PET was crystallized at a ratio of about 20%, no deformation was found. In contrast, if PET was amorphous and the mixing ratio of LCP was low, deformation was observed, and if PET alone was used, the vessel was so drastically deformed that it had no trace of the original form.

From the foregoing, it was confirmed that the heat resistance could be improved by incorporation of LCP or crystallization.

Example 4

A pellet of polyethylene terephthalate (SA-1206 supplied by Unitica; I.V. = 1.07; abbreviated to "PET") and a pellet of a liquid crystal polyester (A-950 supplied by Celanease; abbreviated to "LCP") were mixed and dry-blended at a mixing ratio shown in Table 3. The mixture was dried at 140 °C for more than 5 hours in a moisture-removing hopper drier to remove water sufficiently. The mixture was melt-injected by an injection forming machine (Model FS-75NIII supplied by Nissei Jushi Kogyo), the temperature of which was set so that the resin temperature was 290 to 310 °C, whereby a vessel as shown in Fig. 2 was formed. The obtained vessel was glossy and had an appearance where LCP was uniformly dispersed.

The melt viscosities of PET and LCP measured at a temperature of 290 °C and a shear rate of $1 \times 10^4$ $sec^{-1}$ were $4.4 \times 10^2$ poise and $3.0 \times 10^2$ poise, respectively.

With respect to the obtained vessel, the density, mixing ratio, orientation degree index and oxygen permeability were determined. The obtained results are shown in Table 3. A diagram of the photo of the distribution of the liquid crystal is similar to Fig. 6-A of Example 1. It is considered that the barrier property was obtained by the orientation of the liquid crystal in the form of a layer.

Comparative Example 2

A dry blend was prepared by mixing 80 parts by weight of a pellet of polyethylene terephthalate MEH-2031 supplied by Unitica; I.V. = 0.70; abbreviated to "PET") and 20 parts by weight of a liquid crystal polyester (A-950 supplied by Celanease; abbreviated to "LCP"). The dry blend was dried at 140 °C for more than 5 hours in a moisture-removing hopper drier to remove water sufficiently and the mixture was melt-injected by an injection forming machine (Model FS-75NIII supplied by Nissei Jushi Kogyo), the temperature of which was adjusted so that the resin temperature was 290 to 310 °C, whereby a vessel as shown in Fig. 2 was formed. Certain aggregation of LCP was observed on the obtained vessel, and an appearance in which LCP was uniformly dispersed was not obtained. It is considered that since the melt viscosity of PET was low under the forming conditions ($3.0 \times 10^2$ poise as measured at a temperature of 290 °C and a shear rate of $1 \times 10^4$ $sec^{-1}$), LCP was not sufficiently dispersed and a good appearance was not manifested.

With respect to each of the vessels formed in the foregoing example and comparative example, the density, mixing ratio, orientation degree and oxygen permeability were determined. The obtained results are shown in Table 3.

Table 3

| Mark | Composition Ratio (% by weight) of PET | Composition Ratio (% by weight) of LCP | Density ($g/cm^2$) | Mixing Ratio (%) | Gas Permeability $QO_2$ ($cc/m^2 \cdot 24hrs \cdot atm$) |
|---|---|---|---|---|---|
| Example 4 A | 80 | 20 | 1.3503 | 21.16 | 0.316 |
| B | 85 | 15 | 1.3465 | 14.88 | 0.828 |
| C | 90 | 10 | 1.3450 | 12.40 | 1.868 |
| D | 65 | 35 | 1.3565 | 31.40 | 0.067 |
| Comparative Example 2 | 80 | 20 | 1.3480 | 17.36 | 2.959 |

Example 5

A pellet of polyethylene terephthalate (SA-1206 supplied by Unitica; I.V. = 1.07; abbreviated to "PET") and a pellet of a liquid crystal polyester (LC3000A-950 supplied by Unitica; abbreviated to "LCP") were mixed and dry-blended at a mixing ratio shown in Table 4. The mixture was dried at 120° C for more than 5 hours in a moisture-removing hopper drier to remove water sufficiently. The mixture was melt-injected by an injection forming machine (Model FS-75NIII supplied by Nissei Jushi Kogyo), the temperature of which was set so that the resin temperature was 290 to 310° C, whereby a vessel as shown in Fig. 2 was formed. The obtained vessel was glossy and had an appearance where LCP was uniformly dispersed.

The melt viscosities of PET and LCP measured at a temperature of 290° C and a shear rate of 1 x $10^4$ $sec^{-1}$ were 4.4 x $10^2$ poise and 2.5 x $10^2$ poise, respectively.

With respect to the obtained vessel, the density, mixing ratio and oxygen permeability were determined.

The obtained results are shown in Table 4.

Table 4

| Mark | Composition Ratio (% by weight) of PET | Composition Ratio (% by weight) of LCP | Density ($g/cm^2$) | Mixing Ratio (%) | Gas Permeability $QO_2$ ($cc/m^2 \cdot 24hrs \cdot atm$) |
|---|---|---|---|---|---|
| Example 5 A | 80 | 20 | 1.3475 | 19.61 | 1.463 |
| B | 85 | 15 | 1.3447 | 14.14 | 2.220 |
| C | 90 | 10 | 1.3437 | 12.16 | 2.917 |

Example 6

A pellet of crystallization nucleating agent-containing PET (abbreviated to C-PET") comprising 100 parts by weight of polyethylene terephthalate (density = 1.34 $g/cm^3$; I.V. = 1.07; abbreviated to "PET" ) and 3 parts by weight of low-density polyethylene as the crystallization nucleating agent, and a pellet of a liquid crystal polyester (A-950 supplied by Celanease; abbreviated to "LCP") were mixed and dry-blended at a mixing ratio shown in Table 5. The mixture was dried at 140° C for more than 5 hours in a moisture-removing hopper drier to remove water sufficiently. The mixture was melt-injected by an injection forming machine having a mold-clamping force of 75 tons, the temperature of which was set so that the resin temperature was 290 to 310° C, whereby a vessel as shown in Fig. 2 was formed. The obtained vessel was

glossy and had an appearance where LCP was uniformly dispersed.

For comparison, PET and LCP used were independently melt-injected in the same manner as described above to form vessels as shown in Fig. 2.

The obtained vessels were subjected to the following heat resistance test. Namely, each vessel was placed in an oven having an atmosphere temperature maintained at 160° C for 10 minutes, and the deformation state after the oven heating was visually checked. The results of the examination of the deformation state are shown in Table 5. Also the mixing ratio, orientation degree index and oxygen permeability before the oven treatment and the crystallinity of the vessel before and after the oven treatment are shown in Table 5. In the case where C-PET alone was used, the vessel was deformed by the heat treatment of 260° C - 10 minutes and the function of the vessel was lost. However, if LCP was incorporated in an amount of at least 15% by weight into C-PET, the vessel was not deformed by the heat treatment though a certain shrinkage was observed. The diagram of the photo of the distribution state of the liquid crystal was similar to Fig. 6-A of Example 1. From the foregoing, it is understood that the liquid crystal oriented in the form of a layer acted as a support and enhanced the heat resistance conspicuously. From the fact that the measured value of the oxygen permeability was reduced, it is understood that the liquid crystal was oriented in the form of a layer.

The preliminary heat treatment was conducted at 140° C for 5 minutes for crystallizing C-PET and heat-setting the monoaxially oriented layer of LCP. The vessel subjected to this preliminary heat treatment was placed in an oven having an atmosphere temperature maintained at 260° C for 10 minutes in the same manner as described above, and the state of deformation of the vessel was visually checked. The obtained results are shown in Table 6. Also the mixing ratio and the crystallinity of the vessel before and after the oven treatment (determined by the above-mentioned method (g-2)) are shown in Table 6. In case of the vessel composed solely of C-PET, even if the above preliminary heat treatment was carried out, deformation of the vessel was caused and the vessel had no heat resistance. In contrast, if LCP was incorporated in an amount of at least 10% by weight into C-PET, deformation was not caused, and LCP acted as a support and the heat resistance was drastically improved. Moreover, any shrinkage of the vessel was not observed at all. It is considered that this was the effect attained by crystallization of C-PET by the preliminary heat treatment.

Incidentally, the data of the mixing ratio, crystallinity and orientation degree index shown in the tables are those measured with respect to a sample collected from a central part of the barrel wall of the cup.

Table 5

| Example 6 | Composition Ratio (% by weight) of C-PET | Composition Ratio (% by weight) of LCP | Mixing Ratio (%) | Crystallinity (%) | | Orientation Degree (%) | Gas Permeability $QO_2$ ($cc/m^2 \cdot 24hrs \cdot atm$) | Deformation State |
|---|---|---|---|---|---|---|---|---|
| | | | | before oven treatment | after oven treatment | | | |
| A | 95 | 5 | 4.9 | 9.8 | 33.5 | 67.2 | 2.791 | deformation |
| B | 90 | 10 | 10.8 | 15.6 | 32.0 | 72.4 | 2.050 | certain deformation |
| C | 85 | 15 | 16.7 | 16.9 | 32.3 | 73.4 | 0.909 | no deformation |
| D | 80 | 20 | 19.0 | 20.4 | 33.0 | 75.0 | 0.347 | ditto |
| LCP | 0 | 100 | 100 | - | - | 78.1 | 0.013 | ditto |
| C-PET (comparison) | 100 | 0 | 0 | 8.7 | 33.9 | 0 | 3.01 | large deformation |

Note *: oven treatment conditions: 260°C and 10 minutes

Table 6

| Mark | Composition Ratio (% by weight) of C-PET | Composition Ratio (% by weight) of LCP | Mixing Ratio (%) | Crystallinity(%) after preliminary heat treatment | Crystallinity(%) after oven treatment | Orientation Degree (%) | Deformation State |
|---|---|---|---|---|---|---|---|
| A | 95 | 5 | 4.9 | 23.4 | 31.9 | 68.0 | certain deformation |
| B | 90 | 10 | 10.8 | 24.7 | 32.1 | 73.1 | no deformation |
| C | 85 | 15 | 16.7 | 25.3 | 33.0 | 75.2 | ditto |
| D | 80 | 20 | 19.0 | 25.8 | 33.3 | 77.7 | ditto |
| LCP | 0 | 100 | 100 | - | - | 78.* | ditto |
| C-PET (composition) | 100 | 0 | 0 | 23.1 | 31.7 | 0 | large deformation |

Note
* preliminary heat treatment conditions: 140°C and 5 minutes
* oven treatment conditions: 260°C and 10 minutes

Example 7

C-PET was prepared by incorporating 3 parts by weight of an inorganic filler as the crystallization nucleating agent into 100 parts by weight of PET used in Example 6, and another C-PET was prepared by incorporating 1 part by weight of an inorganic filler and 2 parts by weight of low-density polyethylene into 100 parts by weight of PET. Each C-PET was mixed in the state of pellets with the liquid crystal polyester used in Example 6 at a weight ratio of 80/20 to form a dry blend. Also C-PET used in Example 6 was similarly dry-blended at the above mixing ratio. Each mixture ws dried at 140° C for more than 5 hours by a moisture-removing hopper drier to remove water sufficiently, and the mixture was melt-injected by an

injection forming machine having a mold-clamping force of 75 tons, the temperature of which was set so that the resin temperature was 290 to 310 ° C, whereby a vessel as shown in Fig. 2 was formed. Each of the obtained vessel was glossy and had an appearance in which LCP was uniformly dispersed.

These vessels were subjected to the heat resistance test in the same manner as described in Example 6, and the state of each vessel after withdrawal from the oven was visually examined. The obtained results are shown in Example 7. Deformation was not caused in any of the vessels.

The vessels which had been subjected to the above heat treatment were then subjected to the following falling test. Namely, each vessel was completely filled with distilled water and the vessel was sealed with an aluminum foil. Then, the filled vessel was let to fall down on a concrete floor from a height of 50 cm so that the bottom of the impinged against the concrete floor. This falling was conducted two times, and leakage of water and the state of destruction of the vessel were checked. It was found that the vessel comprising the inorganic filler alone as the crystallization nucleating agent was somewhat more brittle than the vessels comprising the polymeric nucleating agent alone or in combination with the inorganic filler. It is considered that the polymeric nucleating agent acted as the crystallization nucleating agent in C-PET and furthermore, the rubbery elastic characteristics of the polymeric nucleating agent were effective for absorbing shocks. Also the results obtained at the falling test are shown in Table 7.

Incidentally, the data of the mixing ratio, crystallinity and orientation degree index are those determined with respect to a sample collected from a central part of the barrel wall of the cup.

Table 7

| Example 6 | Nucleating Agent | Composition Ratio (% by weight) of C-PET | Composition Ratio (% by weight) of LCP | Mixing Ratio (%) | Crystallinity (%) before oven treatment | Crystallinity (%) after oven treatment | Orientation Degree (%) | Number of Vessels Where Water Leakage and Destruction Occured (in 100 vessels) |
|---|---|---|---|---|---|---|---|---|
| A | inorganic filler | 80 | 20 | 19.0 | 20.0 | 32.5 | 75.0 | 3 |
| B | inorganic filler + low-density PE | 80 | 20 | 20.5 | 19.2 | 30.5 | 74.1 | 0 |
| C | low-density PE | 80 | 20 | 19.6 | 20.6 | 33.3 | 75.1 | 0 |

Note

* oven treatment conditions: 260°C and 10 minutes

* low-density PE: low-density polyethylene

Comparative Example 3

A vessel was prepared in the same manner as in Example 6 by using a mixture of C-PET and liquid crystal polyester (LCP) used in Example 6, in which the mixing ratio of LCP was 80%, and the vessel was

subjected to the oven heat treatment at 260° C for 10 minutes. This vessel and the oven-treated vessels shown in Table 5 of Example 6 were subjected to the falling test described in Example 7. The obtained results are shown in Table 8.

Table 8

| Mark | Composition Ratio (% by weight) of C-PET | Composition Ratio (% by weight) of LCP | Number of Vessel Where Water Leakage and Destruction Occurred (in 100 vessels) |
|---|---|---|---|
| A | 90 | 10 | 0 |
| B | 85 | 15 | 0 |
| C | 80 | 20 | 0 |
| D | 20 | 80 | 91 |
| LCP | 0 | 100 | 100 |
| C-PET | 100 | 0 | 0 |

Comparative Example 4

A pellet of nucleating agent-containing PET (abbreviated to "C-PET") comprising 100 parts of weight of polyethylene terephthalate (density = 1.34 g/cm$^3$, intrinsic viscosity I.V. = 1.46; abbreviated to "PET") and 3 parts by weight of low-density polyethylene as the nucleating agent and a pellet of a liquid crystal polyester (A-950 supplied by "Celanease; abbreviated to "LCP") were mixed at a mixing weight ratio of 80/20 to form a dry blend. The mixture was dried at 140° C for more than 5 hours by a moisture-removing hopper drier and melt-injected into an injection forming machine having a mold-clamping force of 75 tons, the temperature of which was set so that the resin temperature was 290 to 310° C, whereby a vessel as shown in Fig. 2 was formed. Certain aggregation of LCP was observed in the obtained vessel, and LCP was not uniformly dispersed in the appearance. It is considered that the reason is that since the melt viscosity of C-PET was low under the above forming conditions, LCP was not sufficiently dispersed and the above appearance was manifested. The vessel prepared in Example 6 and this comparative example were subjected to the heat resistance test described in Example 6. The obtained results, and the mixing ratio, the

crystallinity of the vessel before or after the oven treatment and the orientation degree index are shown in Table 9. The diagram of the photo of the distribution state of the crystal was substantially the same as Fig. 6-B of Comparative Example 1. Incidentally, the data of the mixing ratio, crystallinity and orientation degree index shown in the table are those obtained with respect to a sample collected from a central part of the barrel wall of the cup.

Table 9

| Mark | Composition Ratio (% by weight) of C-PET | Composition Ratio (% by weight) of LCP | Mixing Ratio (%) | Crystallinity (%) before oven treatment | Crystallinity (%) after oven treatment | Orientation Degree (%) | Gas Permeability $QO_2$ (cc/m$^2$·24hrs atm) | Deformation State |
|---|---|---|---|---|---|---|---|---|
| Example 6 A | 80 | 20 | 19.0 | 20.4 | 33.0 | 74.2 | 0.347 | no deformation |
| Comparative Example 4 | 80 | 20 | 19.6 | 18.6 | 32.8 | 50.1 | 3.250 | deformation observed |

Note * oven treatment conditions: 260°C and 10 minutes

Example 8

A pellet of C-PET used in Example 6 and a pellet of a liquid crystal polyester (supplied by Ueno Seiyaku) containing 20% by weight of an inorganic filler (abbreviated to "LCP") were mixed at a mixing ratio shown in Table 10 to form a dry blend. The mixture was dried at 150° C for more than 5 hours by a moisture-removing hopper drier and was melt-injected by an injection forming machine having a mold-clamping force of 75 tons, the temperature of which was set so that the resin temperature was 310 to 360° C, whereby a vessel as shown in Fig. 2 was formed. The obtained vessel was glossy and had an appearance in which LCP was uniformly dispersed. The vessel was subjected to the heat resistance test described in Example 6, and after withdrawal from the oven, the state of the vessel was visually observed. The obtained results are shown in Table 10. Deformation was not found in any of the vessels.

The vessels subjected to the above heat treatment were subjected to the falling test described in Example 7, and the state of destruction was examined. By the effect of the inorganic filler incorporated in LCP, embrittlement of the vessel was not observed. Furthermore, any vessel was destroyed. It is considered that this effect was attained by the polymeric nucleating agent incorporated in C-PET.

Table 10

| Example 8 | Composition Ratio(% by weight) of C-PET | Composition Ratio (% by weight) of LCP | Mixing Ratio (%) | Crystallinity(%) before oven treatment | Crystallinity(%) after oven treatment | Orientation Degree (%) | Deformation State | Gas Permeability $QO_2$ ($cc/m^2 \cdot 24hrs \cdot atm$) |
|---|---|---|---|---|---|---|---|---|
| A | 90 | 10 | 10.6 | 15.2 | 31.9 | 73.4 | some deformation | 0 |
| B | 85 | 15 | 16.5 | 16.0 | 32.5 | 72.3 | no deformation | 0 |
| C | 80 | 20 | 20.2 | 19.8 | 32.0 | 72.0 | ditto | 0 |

Note * oven treatment conditions: 260°C and 10 minutes

## Claims

1. A process for the preparation of a liquid crystal polyester vessel having an excellent gas permeation

resistance, which comprises melt-injecting a mixture containing a thermoplastic resin and a liquid crystal polyester, in which the melt viscosity of the thermoplastic resin, measured at a temperature highly by at least 10 °C than the higher temperature between the melting point of the thermoplastic resin and the flow-initiating point of the liquid crystal polyester and a shear rate of at least $1 \times 10^5$ $sec^{-1}$, is higher than the melt viscosity of the liquid crystal polyester measured under the same conditions, into a vessel-injection-molding mold at a resin temperature giving said difference of the melt viscosity, to form in the mold a multi-layer distribution structure in which the thermoplastic resin is predominantly distributed in inner and outer portions and the liquid crystal polyester is predominantly distributed in the intermediate portion.

**2.** A process for the preparation of a liquid crystal polyester vessel having excellent gas permeation resistance and heat resistance according to claim 1, wherein the thermoplastic resin is a crystalline thermoplastic resin containing a crystallization nucleating agent.

**3.** A process for the preparation of a liquid crystal polyester vessel having excellent gas permeation resistance and heat resistance according to claim 1 or 2, wherein the thermoplastic resin is a crystalline thermoplastic polyester containing a crystallization nucleating agent.

**4.** A liquid crystal vessel having an excellent gas permeation resistance, which comprises a thermoplastic resin distributed in the form of a layer predominantly in inner and outer surface portions and a liquid crystal polyester distributed in the form of a layer, fiber, flake or particle predominantly in a central portion, wherein the liquid crystal polyester is present in the state substantially continuous in the plane direction of the vessel when seen in the direction of the thickness of the vessel wall and the liquid polyester is molecularly oriented mainly in one axial direction, and the thermoplastic resin is substantially unoriented.

**5.** A liquid crystal polyester vessel having an excellent gas permeation resistance according to claim 4, wherein the liquid crystal polyester is at least one thermotropic polyester selected from the group consisting of (I) a polyester composed of a polycondensate of an aromatic dicarboxylic acid component and an aromatic diol component, (II) a polyester composed of a polycondensate of an aromatic hydroxycarboxylic acid, (III) a copolyester of (I) and (II), and (IV) a copolyester of at least one polyester selected from the group consisting of (I), (II) and (III) with polyethylene terephthalate.

**6.** A liquid crystal polyester vessel having an excellent gas permeation resistance according to claim 4, wherein the liquid crystal polyester is oriented so that the orientation degree (F) defined by the following formulae is at least 50%:

$$\text{orientation degree index } \sigma = \frac{\int_{0°}^{90°} I(\beta)\cdot\beta d\beta}{\int_{0°}^{90°} I(\beta) d\beta}$$

and

$$\text{orientation degree } F = \frac{45° - \sigma}{45°} \times 100$$

wherein $I(\beta)$ represents the diffraction intensity observed when by using CuK$\alpha$ rays under an Ni filter, scanning is effected in the direction of the azimuth while setting the sample in the axial direction and fixing $2\theta$ at the angle ($2\theta = 20°$) of the strongest diffraction peak on the equator, and $\beta$ represents the azimuth.

7. A liquid crystal polyester vessel having an excellent gas permeation resistance according to claim 4, wherein the liquid crystal polyester is contained in an amount of 5 to 80% by weight.

8. A liquid crystal polyester vessel having excellent gas permeation resistance and heat resistance according to claim 4, wherein the thermoplastic resin has a crystallinity of at least 10%.

9. A vessel according to any of claims 1 through 4, wherein the thermoplastic resin is polyethylene tetephthalate.

10. A liquid crystal polyester vessel having excellent gas permeation resistance and heat resistance according to any claims 4 through 8, wherein the thermoplastic resin is a crystalline thermoplastic resin containing a crystallization nucleating agent.

11. A liquid crystal polyester vessel having excellent gas permeation resistance and heat resistance according to claim 10, wherein the thermoplastic resin is a crystalline thermoplastic polyester containing a crystallization nucleating agent.

12. A vessel according to claim 10 or 11, wherein the crystallization nucleating agent is at least one member selected from the group consisting of polymeric nucleating agents, organic metal salts and silicate compounds.

13. A vessel according to claim 4, 10 or 11, wherein at least 1% by weight of an inorganic filler is incorporated in addition to the thermoplastic resin and liquid crystal polyester.

14. A vessel according to claim 13, wherein the inorganic filler is predominantly present in the liquid polyester.

FIG. 1

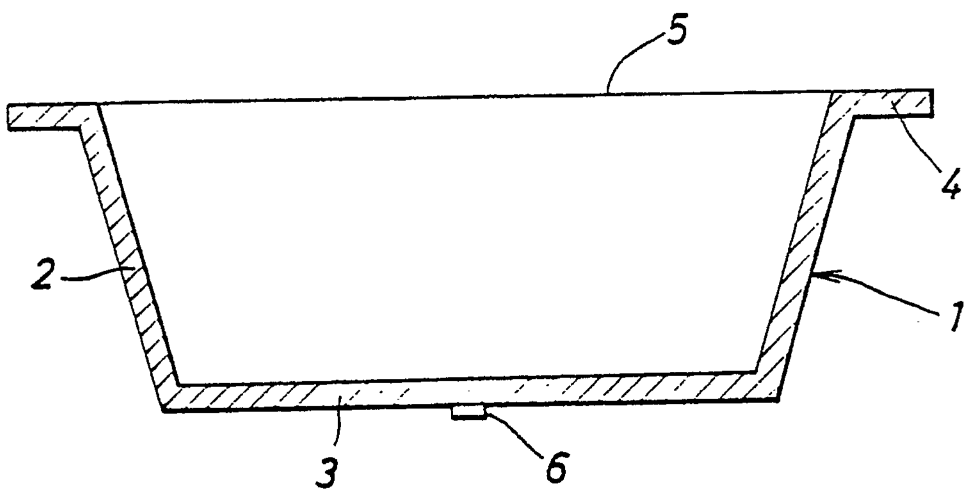


FIG. 2

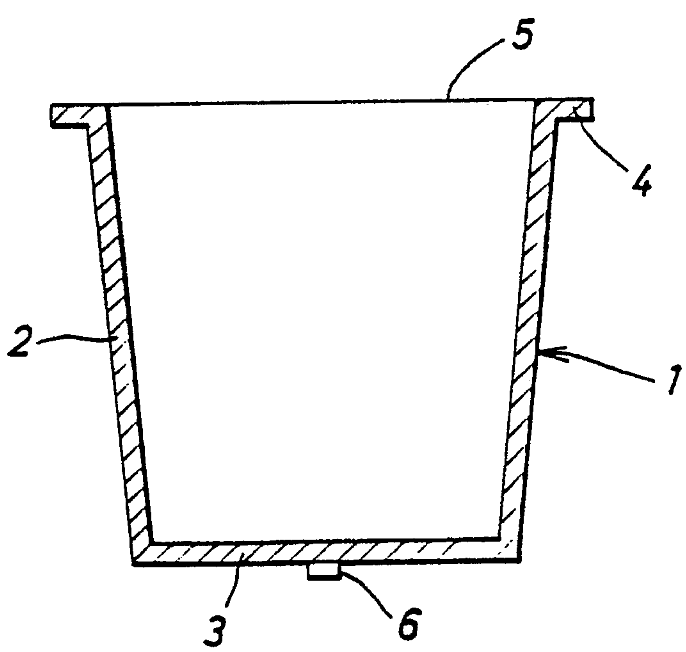

FIG. 3-A

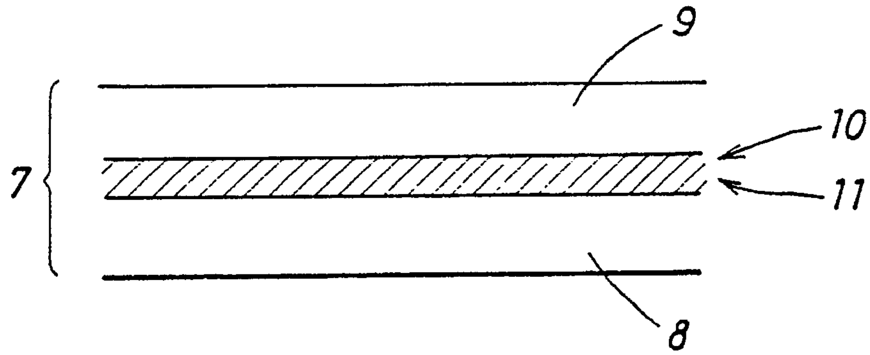


FIG. 3-B

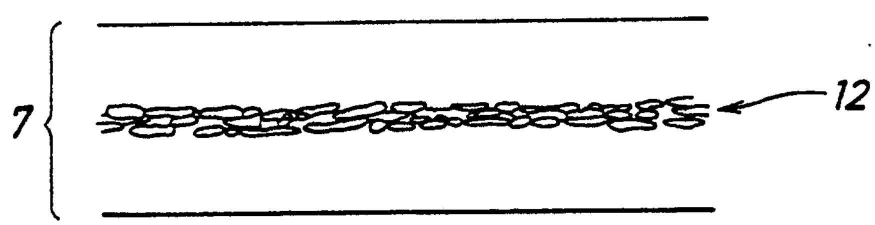


FIG. 3-C

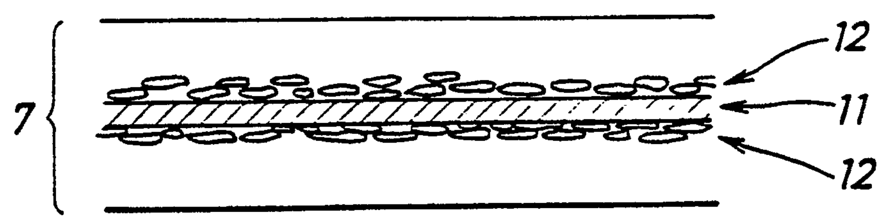

FIG. 4-A

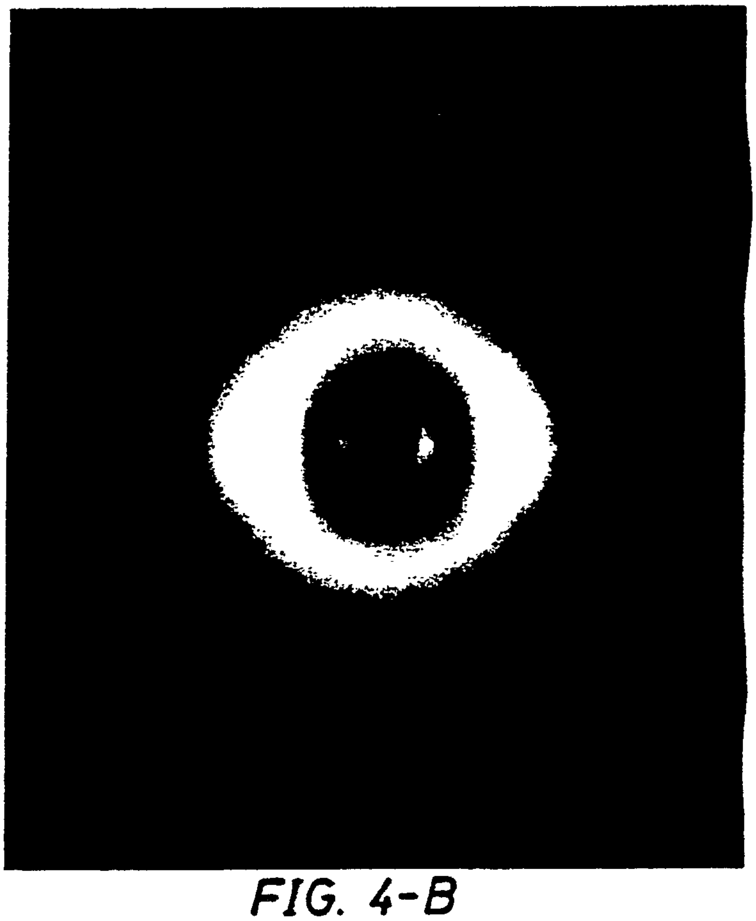

FIG. 4-B

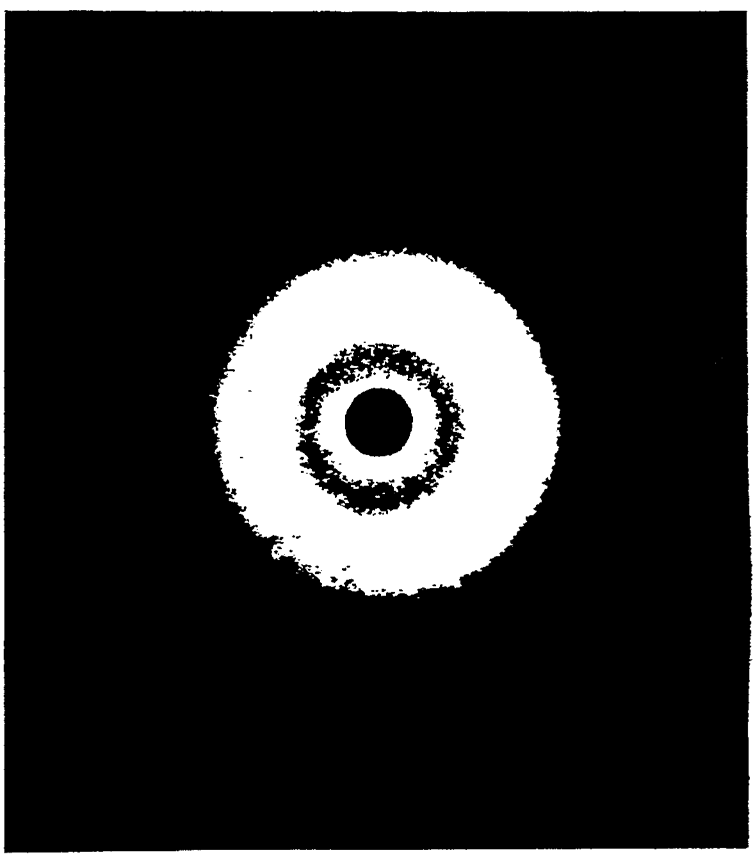

FIG. 5-A

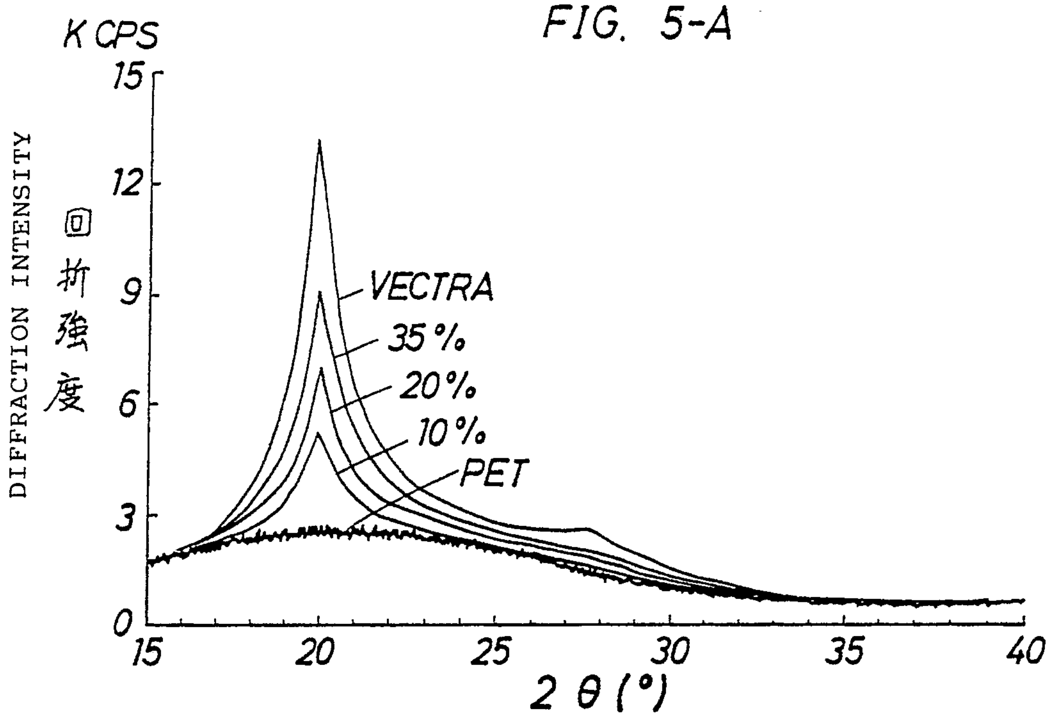
KCPS
DIFFRACTION INTENSITY
回折強度
15
12
9
6
3
0
VECTRA
35%
20%
10%
PET
15
20
25
30
35
40
2θ(°)

FIG. 5-B

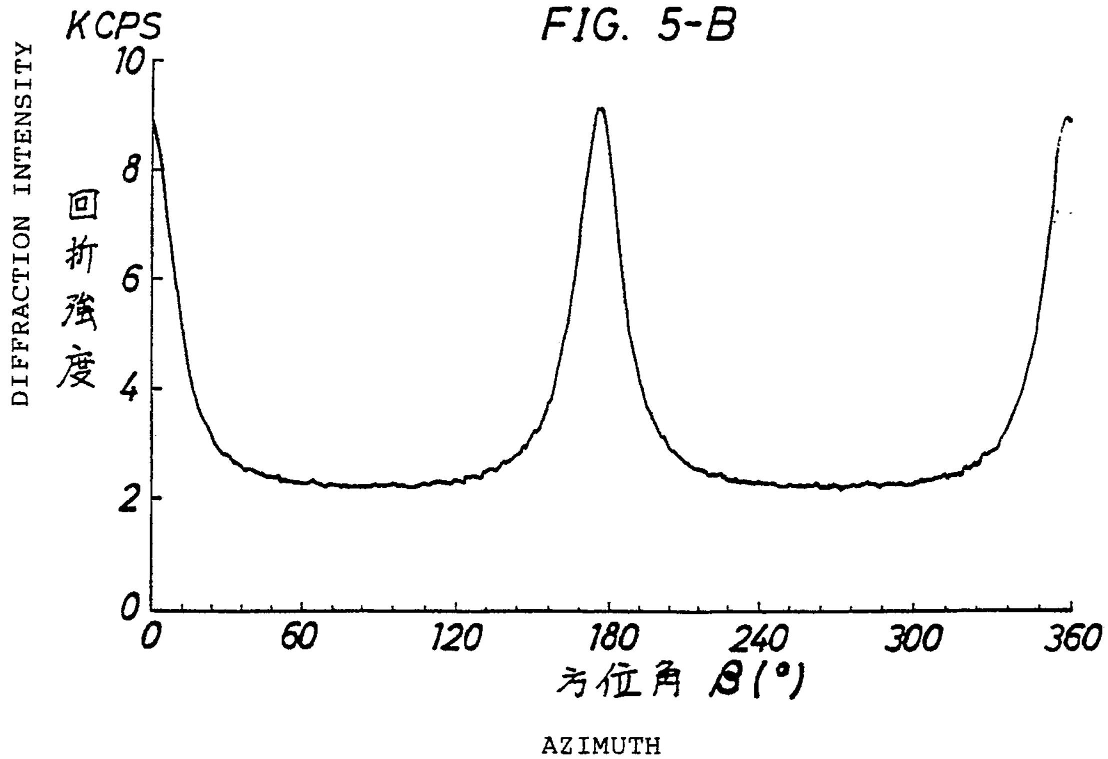
KCPS
DIFFRACTION INTENSITY
回折強度
10
8
6
4
2
0
0
60
120
180
240
300
360
方位角 β(°)
AZIMUTH

FIG. 6-A

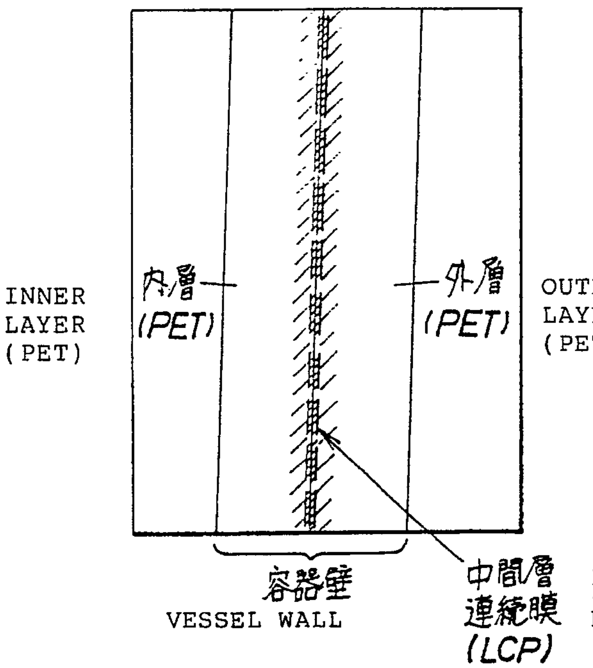


FIG. 6-B

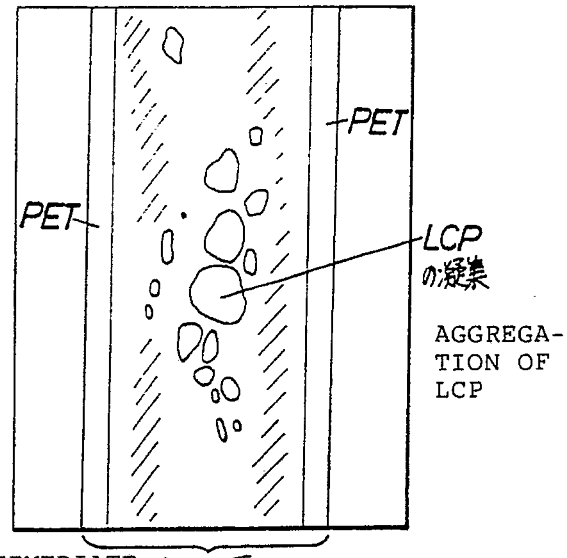


FIG. 6-C

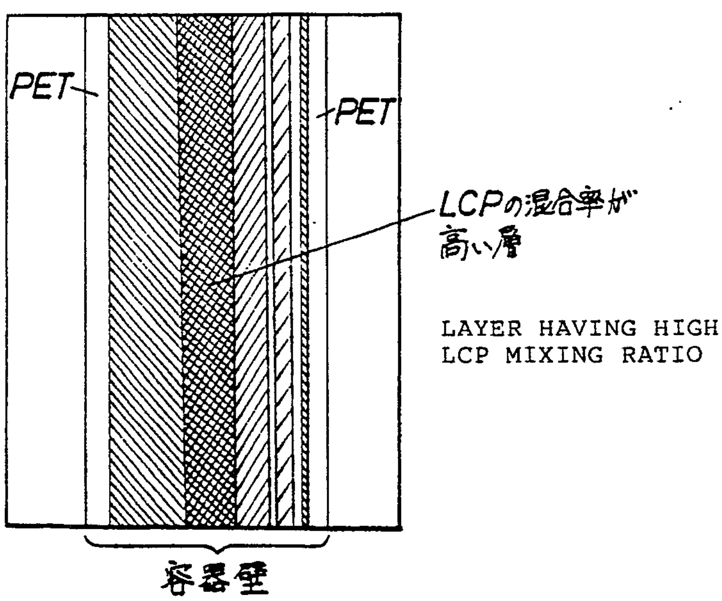

FIG. 7-A

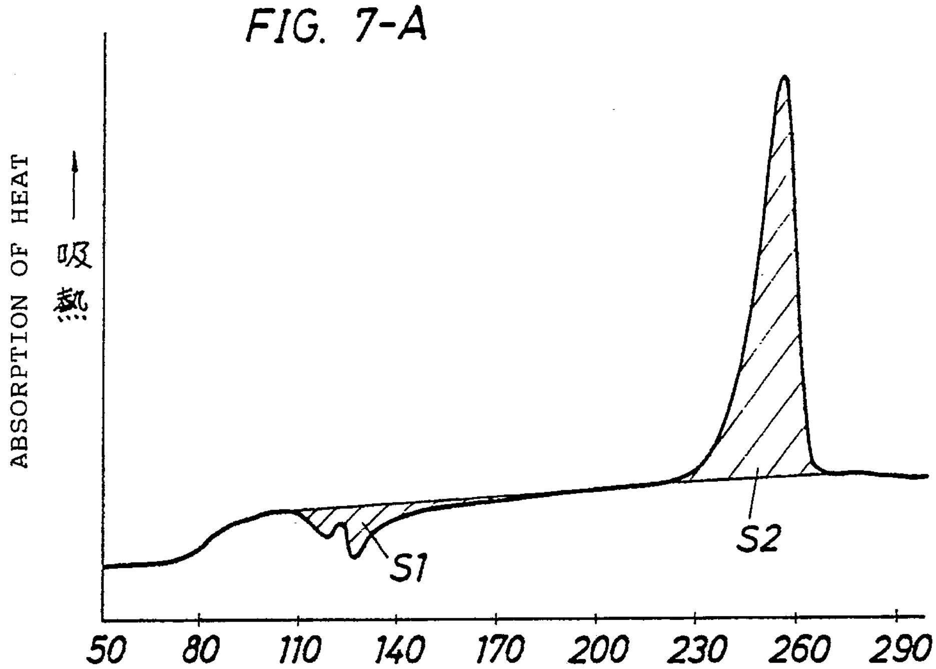
ABSORPTION OF HEAT
吸熱
S1
S2
50
80
110
140
170
200
230
260
290

FIG. 7-B

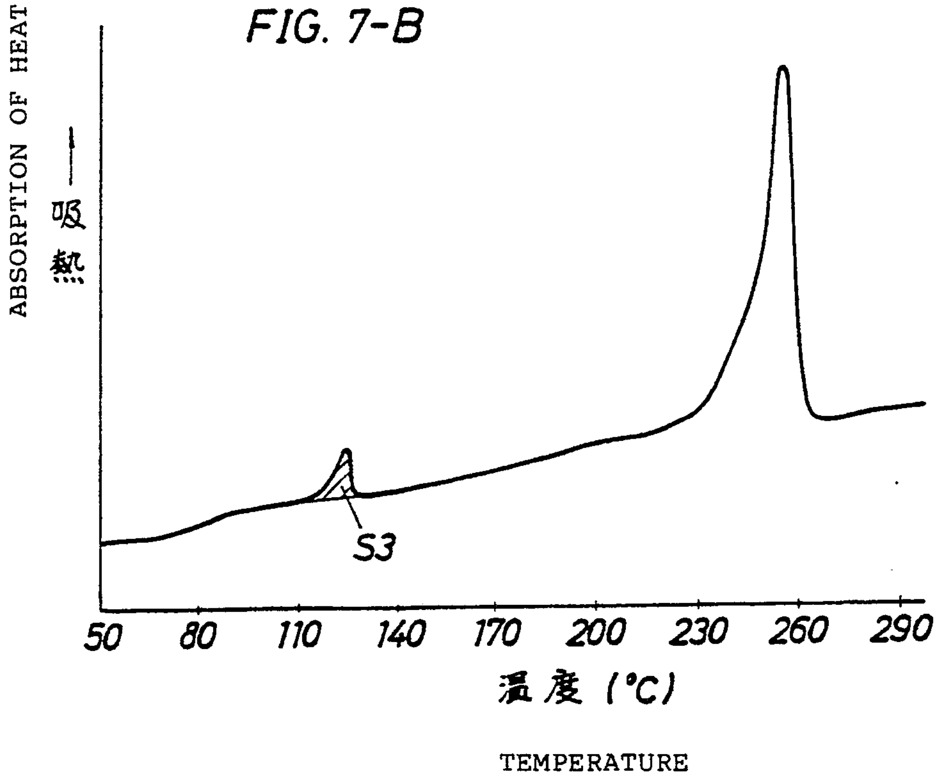
ABSORPTION OF HEAT
吸熱
S3
50
80
110
140
170
200
230
260
290
温度 (°C)
TEMPERATURE

# INTERNATIONAL SEARCH REPORT

International Application No PCT/JP90/00362

**I. CLASSIFICATION OF SUBJECT MATTER** (if several classification symbols apply, indicate all) [6]

According to International Patent Classification (IPC) or to both National Classification and IPC

Int. Cl[5] B65D81/24, B32B1/02, B32B27/36, B29C45/00//B29K67:00, B29L22:00

**II. FIELDS SEARCHED**

Minimum Documentation Searched [7]

| Classification System | Classification Symbols |
|---|---|
| IPC | B65D81/24, B32B1/02, B32B27/36, B29C45/00//B29K67:00, B29L22:00 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 62-187033 (Mitsubishi Chemical Industries Ltd.), 15 August 1987 (15. 08. 87), Scope of claim, (Family: none) | 1 - 14 |
| T | JP, A, 1-192551 (Kogyo Gijutsuin-cho), 2 August 1989 (02. 08. 89), Scope of claim, (Family: none) | 1 - 14 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 15, 1990 (15. 05. 90) | May 28, 1990 (28. 05. 90) |
| **International Searching Authority** | **Signature of Authorized Officer** |
| Japanese Patent Office | |